# EUROPEAN PATENT SPECIFICATION

(11) **EP 3 537 502 B1**
(45) Date of publication and mention of the grant of the patent: **28.10.2020**
(21) Application number: 19161078.1
(22) Date of filing: 06.03.2019
(51) Int. Cl.: H01M 2/10, B60L 50/64

(54) **LEANING VEHICLE BATTERY AND LEANING VEHICLE**
ZWEIRADBATTERIE UND ZWEIRAD
BATTERIE DE VÉHICULE À DEUX ROUES ET VÉHICULE À DEUX ROUES

(30) Priority: 08.03.2018 JP 2018041659
(43) Date of publication of application: 11.09.2019
(73) Proprietor: YAMAHA HATSUDOKI KABUSHIKI KAISHA, Iwata-shi, Shizuoka 438-8501 (JP)
(72) Inventor: ITO, Jin, Shizuoka, 438-8501 (JP); TOYOTA, Takeshi, Shizuoka, 438-8501 (JP)
(74) Representative: Zimmermann, Tankred Klaus

(56) References cited:
- EP-A1- 2 774 831
- EP-A1- 2 939 911
- US-A1- 2013 244 068

## Description

### TECHNICAL FIELD

The present invention relates to a leaning vehicle battery and a leaning vehicle provided with the leaning vehicle battery.

### BACKGROUND ART

Batteries for four-wheeled vehicles, leaning vehicles or other vehicles are required to output a large voltage. Patent Literature 1 describes a leaning vehicle battery provided with a storage cell assembly that has a plurality of storage cells. In the leaning vehicle battery, the storage cell assembly is made up of the storage cells connected in series. As a result, the storage cell assembly can output a large voltage. The storage cell assembly is contained in a storage cell assembly case.

### CITATION LIST

### PATENT LITERATURE

Patent Literature 1: Japanese Patent Application Publication No. 2016-207307

Document EP2939911 discloses a leaning vehicle battery, wherein the bottom section of the lower member of the battery is supported by the vehicle body from the sides.

### SUMMARY OF INVENTION

### TECHNICAL PROBLEM

A leaning vehicle is lighter in weight than a four-wheeled vehicle. Accordingly, while the leaning vehicle is running, the leaning vehicle makes a large movement in a leaning-vehicle up-down direction. Consequently, the storage cell assembly case in the leaning vehicle is likely to receive a load from the storage cell assembly. Furthermore, since the leaning vehicle is required to be light weight, the leaning vehicle battery is also required to be light weight. Accordingly, in designing a leaning vehicle battery, there is a demand for an improvement of the load bearing capability and for a weight reduction of the battery. The load bearing capability of a storage cell assembly case refers to a durability of the storage cell assembly case against a load of the storage cell assembly. In other words, the load bearing capability of a storage cell assembly case refers to strength of the storage cell assembly case against the load of the storage cell assembly.

Accordingly, an object of the present invention is to provide a leaning vehicle battery and a leaning vehicle, in which the leaning vehicle battery can output a large voltage, and even after weight reduction is achieved in the leaning vehicle battery, the load bearing capability of the storage cell assembly case can be maintained.

### SOLUTION TO PROBLEM

The inventors of the present application have conducted a study on how to cause the leaning vehicle battery to output a large voltage. As a result, the inventors have concluded that it is enough to use a storage cell assembly that includes a plurality of storage cells as is the case with the leaning vehicle battery described in Patent Literature 1.

Next, the inventors have studied how the load bearing capability of the storage cell assembly case can be improved and how weight reduction can be achieved in the leaning vehicle battery. A storage cell assembly that includes a large number of storage cells increases the weight of the leaning vehicle battery. Accordingly, the inventors have considered devising a structure other than the storage cell assembly to reduce the weight of the leaning vehicle battery. As a result, the inventors have focused on the storage cell assembly case for containing the storage cell assembly.

At first, the inventors considered reducing the thickness of walls of the storage cell assembly case to reduce the weight of the storage cell assembly case. However, the reduced wall thickness of the storage cell assembly case degrades the rigidity of the storage cell assembly case. As a result, it is difficult to obtain a sufficient load bearing capability of the storage cell assembly case.

Then, the inventors have studied how a load is applied from the storage cell assembly to the storage cell assembly case in a leaning vehicle. The leaning vehicle may sometimes jump, or make other actions, to lift its front or rear wheel off the ground and then land the front or rear wheel. The storage cell assembly is mounted on a bottom section of the storage cell assembly case. Accordingly, the inventors have found that, in the case of the leaning vehicle, the storage cell assembly applies a large load to the bottom section of the storage cell assembly case in a leaning-vehicle-battery downward direction when the leaning vehicle touches the ground. Therefore, the inventors have concluded that the bottom section of the storage cell assembly case may desirably have high load bearing capability. Then, the inventors have found that the rigidity of the bottom section of the storage cell assembly case may desirably be increased.

As described above, in order to maintain the load bearing capability of the storage cell assembly case even after weight reduction is achieved in the leaning vehicle battery, the inventors have concluded that the storage cell assembly case may desirably have a structure as described below by increasing the rigidity of the bottom section of the storage cell assembly case while the thickness of walls of the storage cell assembly case is reduced. The inventors have first divided the storage cell assembly case into two members: a storage-cell-assembly-case upper member and a storage-cell-assembly-case lower member that includes the bottom section. In addition, the inventors have made the size of the storage-cell-assembly-case upper member mounted on an upright vehicle body in a leaning-vehicle-battery up-down direction larger than the size of the storage-cell-assembly-case lower member mounted on the upright vehicle body in the leaning-vehicle-battery up-down direction.

As described above, since the storage-cell-assembly-case upper member and the storage-cell-assembly-case lower member that includes the bottom section are separate members, only the rigidity of the storage-cell-assembly-case lower member that includes the bottom section can easily be increased. In addition, the size of the storage-cell-assembly-case upper member mounted on the upright vehicle body in the leaning-vehicle-battery up-down direction is larger than the size of the storage-cell-assembly-case lower member mounted on the upright vehicle body in the leaning-vehicle-battery up-down direction. In other words, the size of the storage-cell-assembly-case lower member that includes the bottom section is smaller. Accordingly, an increase in the weight of the storage cell assembly case is suppressed even with increased rigidity of the storage-cell-assembly-case lower member that includes the bottom section. For the reasons described above, the inventors have concluded that the load bearing capability of the storage cell assembly case can be maintained even after weight reduction is achieved in the leaning vehicle battery.

In order to solve the problems described above, the present invention adopts the following configuration.

A leaning vehicle battery of a first aspect is a leaning vehicle battery mountable to a leaning vehicle, the leaning vehicle including a vehicle body that leans in a leaning-vehicle leftward direction when the leaning vehicle turns in the leaning-vehicle leftward direction and that leans in a leaning-vehicle rightward direction when the leaning vehicle turns in the leaning-vehicle rightward direction,
wherein, when the leaning vehicle battery is mounted on the upright vehicle body, frontward, backward, leftward, rightward, upward, and downward directions are defined as leaning-vehicle-battery frontward, backward, leftward, rightward, upward, and downward directions, respectively, and
wherein, when the leaning vehicle battery is mounted on the upright vehicle body, a surface of the leaning vehicle battery supported by the vehicle body of the leaning vehicle from below in the leaning-vehicle-battery up-down direction is defined as a bottom surface of the leaning vehicle battery,
wherein the leaning vehicle battery includes:
a storage cell assembly that includes a plurality of storage cells; and
a storage cell assembly case that forms a storage-cell-assembly containing space for containing the storage cell assembly, and
wherein the storage cell assembly case satisfies the following conditions (A) and (B) or the following conditions (C) and (D):
(A) the storage cell assembly case includes: a storage-cell-assembly-case lower member including a bottom section having a plate shape, the storage-cell-assembly-case lower member having a structure that is inseparable into two or more sub-members, the bottom section including: a first main surface that receives a load from the storage cell assembly in the leaning-vehicle-battery downward direction; and a second main surface, which is the bottom surface of the leaning vehicle battery, supported by the vehicle body of the leaning vehicle from below in the leaning-vehicle-battery up-down direction; and a storage-cell-assembly-case upper member disposed above the storage-cell-assembly-case lower member in the leaning-vehicle-battery upward direction and fixed to the storage-cell-assembly-case lower member, the storage-cell-assembly-case upper member having a structure that is separable into two or more storage-cell-assembly-case upper-sub-members, and
(B) a size of at least one storage-cell-assembly-case upper-sub-member of the two or more storage-cell-assembly-case upper-sub-members in a leaning-vehicle-battery up-down direction is larger than a size of the storage-cell-assembly-case lower member in the leaning-vehicle-battery up-down direction, the storage-cell-assembly-case lower member including a bottom section that has a plate shape and includes the first main surface that receives a load from the storage cell assembly in the leaning-vehicle-battery downward direction, and the second main surface, which is the bottom surface of the leaning vehicle battery, supported by the vehicle body of the leaning vehicle from below in the leaning-vehicle-battery up-down direction, or
(C) the storage cell assembly case includes: a storage-cell-assembly-case lower member including a bottom section having a plate shape, the storage-cell-assembly-case lower member having a structure that is inseparable into two or more sub-members, the bottom section including: a first main surface that receives a load from the storage cell assembly in the leaning-vehicle-battery downward direction; and a second main surface, which is the bottom surface of the leaning vehicle battery, supported by the vehicle body of the leaning vehicle from below in the leaning-vehicle-battery up-down direction; and a storage-cell-assembly-case upper member disposed above the storage-cell-assembly-case lower member in the leaning-vehicle-battery upward direction and fixed to the storage-cell-assembly-case lower member, the storage-cell-assembly-case upper member having a structure that is inseparable into two or more sub-members, and
(D) a size of the storage-cell-assembly-case upper member in the leaning-vehicle-battery up-down direction is larger than a size of the storage-cell-assembly-case lower member in the leaning-vehicle-battery up-down direction, the storage-cell-assembly-case lower member including a bottom section that has a plate shape and includes the first main surface that receives a load from the storage cell assembly in the leaning-vehicle-battery downward direction, and the second main surface, which is the bottom surface of the leaning vehicle battery, supported by the vehicle body of the leaning vehicle from below in the leaning-vehicle-battery up-down direction.

The leaning vehicle battery of the first aspect includes a storage cell assembly that includes a plurality of storage cells. Accordingly, the leaning vehicle battery of the first aspect can output a large voltage.

In the leaning vehicle battery of the first aspect, the load bearing capability of the storage cell assembly case can be maintained even after weight reduction is achieved in the leaning vehicle battery. Specifically, the leaning vehicle makes a large movement in a leaning-vehicle up-down direction. Consequently, the bottom section of the storage cell assembly case in the leaning vehicle is likely to receive a load from the storage cell assembly. Therefore, the rigidity of the bottom section of the storage cell assembly case may desirably be increased.

Accordingly, in the leaning vehicle battery of the first aspect, the storage cell assembly case has either the structures (A) and (B) or structures (C) and (D).
(A) The storage cell assembly case includes: a storage-cell-assembly-case lower member including a bottom section having a plate shape, the storage-cell-assembly-case lower member having a structure that is inseparable into two or more sub-members, the bottom section including: a first main surface that receives a load from the storage cell assembly in the leaning-vehicle-battery downward direction; and a second main surface, which is the bottom surface of the leaning vehicle battery; and a storage-cell-assembly-case upper member disposed above the storage-cell-assembly-case lower member in the leaning-vehicle-battery upward direction and fixed to the storage-cell-assembly-case lower member, the storage-cell-assembly-case upper member having a structure that is separable into two or more storage-cell-assembly-case upper-sub-members.
(B) The size of at least one storage-cell-assembly-case upper-sub-member in the leaning-vehicle-battery up-down direction is larger than the size of the storage-cell-assembly-case lower member in the leaning-vehicle-battery up-down direction, the storage-cell-assembly-case lower member including a bottom section that has a plate shape and includes the first main surface that receives a load from the storage cell assembly in the leaning-vehicle-battery downward direction, and the second main surface, which is the bottom surface of the leaning vehicle battery.
(C) The storage cell assembly case includes: a storage-cell-assembly-case lower member including a bottom section having a plate shape, the storage-cell-assembly-case lower member having a structure that is inseparable into two or more sub-members, the bottom section including: a first main surface that receives a load from the storage cell assembly in the leaning-vehicle-battery downward direction; and a second main surface, which is the bottom surface of the leaning vehicle battery; and a storage-cell-assembly-case upper member disposed above the storage-cell-assembly-case lower member in the leaning-vehicle-battery upward direction and fixed to the storage-cell-assembly-case lower member, the storage-cell-assembly-case upper member having a structure that is inseparable into two or more sub-members.
(D) The size of the storage-cell-assembly-case upper member in the leaning-vehicle-battery up-down direction is larger than the size of the storage-cell-assembly-case lower member in the leaning-vehicle-battery up-down direction, the storage-cell-assembly-case lower member including a bottom section that has a plate shape and includes the first main surface that receives a load from the storage cell assembly in the leaning-vehicle-battery downward direction, and the second main surface, which is the bottom surface of the leaning vehicle battery.

As described above, since the storage cell assembly case has the structure (A) or (C), the rigidity of the storage-cell-assembly-case lower member can easily be increased without increasing the rigidity of the storage-cell-assembly-case upper member. Further, since the storage cell assembly case has the structure (B) or (D), the size of the storage-cell-assembly-case lower member is reduced. Accordingly, an increase in the weight of the storage cell assembly case is suppressed even with increased rigidity of the storage-cell-assembly-case lower member because of a small increased amount of weight of the storage-cell-assembly-case lower member. As a result, even after weight reduction is achieved in the leaning vehicle battery, the load bearing capability of the storage cell assembly case can be maintained.

A leaning vehicle battery of a second aspect is according to the leaning vehicle battery of the first aspect, in which,
the storage cell assembly has a structure in which the plurality of storage are cells stacked together in a stacked direction, the storage cell having a flat shape.

According to the leaning vehicle battery of the second aspect, the storage cell assembly has a structure in which the plurality of storage cells are stacked together in a stacked direction, the storage cell having a flat shape. Such a stacked structure is suitable for increasing the amount of charge per unit volume in the storage cell assembly.

A leaning vehicle battery of a third aspect is according to the leaning vehicle battery of the second aspect, in which,
the stacked direction of the plurality of storage cells coincides with the leaning-vehicle-battery up-down direction.

According to the leaning vehicle battery of the third aspect, cell stack shifting is less likely to occur in the storage cell assembly. The cell stack shifting in the storage cell assembly refers to a shifting event of storage cells in a leaning-vehicle-battery front-back or left-right direction. In the leaning vehicle battery of the third aspect, the stacked direction of the plurality of storage cells coincides with the leaning-vehicle-battery up-down direction. Accordingly, when the leaning vehicle makes a large movement in the leaning-vehicle up-down direction, a force causing the cell stack shifting in the storage cell assembly is less likely to propagate to the storage cell assembly. Suppression of the cell stack shifting in the storage cell assembly contributes to an improvement of the load bearing capability of the storage cell assembly case.

A leaning vehicle battery of a fourth aspect is according to the leaning vehicle battery of the second aspect, in which,
the stacked direction of the plurality of storage cells coincides with a leaning-vehicle-battery front-back or left-right direction.

A leaning vehicle battery of a fifth aspect is according to the leaning vehicle battery of the third aspect, in which,
the size of the storage cell in the leaning-vehicle-battery up-down direction disposed on a lowermost position in the plurality of storage cells in the leaning-vehicle-battery downward direction is larger than the size of the storage-cell-assembly-case lower member in the leaning-vehicle-battery up-down direction.

According to the leaning vehicle battery of the fifth aspect, the storage cell disposed on the lowermost position in the leaning-vehicle-battery downward direction is raised from the storage-cell-assembly-case lower member in the leaning-vehicle-battery upward direction. In other words, at least part of the storage cell disposed on the lowermost position in the leaning-vehicle-battery downward direction overlaps with the storage-cell-assembly-case upper member as viewed in the leaning-vehicle-battery backward or rightward direction. Accordingly, when the storage cell disposed on the lowermost position in the leaning-vehicle-battery downward direction receives a force in the leaning-vehicle-battery front-back or left-right direction, the force received by the storage cell disposed on the lowermost position in the leaning-vehicle-battery downward direction is dispersed to the storage-cell-assembly-case upper member and the storage-cell-assembly-case lower member.

A leaning vehicle battery of a sixth aspect is according to the leaning vehicle battery of any of the first to fifth aspects, in which,
the storage cell assembly is fixed to the storage-cell-assembly-case lower member.

According to the leaning vehicle battery of the sixth aspect, the load bearing capability of the storage cell assembly case is improved. Specifically, the storage-cell-assembly-case lower member has a structure with which high rigidity can easily be obtained. Accordingly, the storage-cell-assembly-case lower member is less likely to be deformed. Accordingly, the storage cell assembly is fixed to the storage-cell-assembly-case lower member. In this way, the storage cell assembly is less likely to be deformed when the load of the storage cell assembly is applied to the storage-cell-assembly-case lower member. As a result, according to the leaning vehicle battery of the sixth aspect, the load bearing capability of the storage cell assembly case is improved.

A leaning vehicle battery of a seventh aspect is according to the leaning vehicle battery of any of the first to sixth aspects, in which,
the leaning-vehicle-battery left-right direction coincides with a vehicle-body left-right direction, and
the size of the storage cell assembly case in the leaning-vehicle-battery left-right direction is smaller than the size of the storage cell assembly case in the leaning-vehicle-battery front-back direction and the size of the storage cell assembly case in the leaning-vehicle-battery up-down direction.

According to the leaning vehicle battery of the seventh aspect, a torsion in the leaning vehicle battery can easily be suppressed with the size of the leaning vehicle in the leaning-vehicle left-right direction being made small. Specifically, the size of the storage cell assembly case in the leaning-vehicle-battery left-right direction is smaller than the size of the storage cell assembly case in the leaning-vehicle-battery front-back direction and the size of the storage cell assembly case in the leaning-vehicle-battery up-down direction. As a result, the size of the leaning vehicle is reduced in the leaning-vehicle left-right direction. It is noted that the storage cell assembly case has a structure that is slim in the leaning-vehicle-battery left-right direction. Consequently, when a vibration in the leaning-vehicle left-right direction is applied to the leaning vehicle battery, the leaning vehicle battery is prone to deformation in general such that the left and right faces of the leaning vehicle battery are distorted. However, the leaning vehicle battery is generally supported by the vehicle body of the leaning vehicle in the leaning-vehicle leftward and rightward directions. As a result, according to the leaning vehicle battery of the seventh aspect, a torsion in the leaning vehicle battery can easily be suppressed.

A leaning vehicle battery of an eighth aspect is according to the leaning vehicle battery of any of the first to seventh aspects, in which,
the leaning vehicle battery includes
a leaning-vehicle-battery handle attached to the storage cell assembly case and held by a user.

According to the leaning vehicle battery of the eighth aspect, the leaning vehicle battery can easily be attached and removed to and from the vehicle body by the user.

A leaning vehicle battery of a ninth aspect is according to the leaning vehicle battery of any of the first to eighth aspects, in which,
a recess for a user to hold is provided on a front, rear, left, or right face of the storage cell assembly case.

According to the leaning vehicle battery of the ninth aspect, the leaning vehicle battery can easily be attached and removed to and from the vehicle body by the user.

A leaning vehicle battery of a tenth aspect is according to the leaning vehicle battery of any of the first to ninth aspects, in which,
the leaning vehicle battery further includes
a plate-like member including a fifth main surface brought into contact with the storage cell assembly and a sixth main surface brought into contact with the bottom section.

According to the leaning vehicle battery of the tenth aspect, the bottom section of the storage-cell-assembly-case lower member is reinforced by the plate-like member.

A leaning vehicle battery of an eleventh aspect is according to the leaning vehicle battery of any of the first to tenth aspects, in which,
a material for the storage-cell-assembly-case upper member is different from a material for the storage-cell-assembly-case lower member.

According to the leaning vehicle battery of the eleventh aspect, the degree of freedom in selecting the material for the storage-cell-assembly-case upper member and the degree of freedom in selecting the material for the storage-cell-assembly-case lower member are enhanced.

A leaning vehicle battery of a twelfth aspect is according to the leaning vehicle battery of the eleventh aspect, in which,
the specific gravity of the material for the storage-cell-assembly-case upper member is smaller than the specific gravity of the material for the storage-cell-assembly-case lower member.

According to the leaning vehicle battery of the twelfth aspect, a center of gravity of the leaning vehicle battery in the leaning-vehicle-battery up-down direction is lowered.

A leaning vehicle according to a thirteenth aspect, including:
a vehicle body that leans in a leaning-vehicle leftward direction when the leaning vehicle turns in the leaning-vehicle leftward direction and that leans in a leaning-vehicle rightward direction when the leaning vehicle turns in the leaning-vehicle rightward direction;
the leaning vehicle battery of any of the first to twelfth aspects supported by the vehicle body;
a drive wheel supported by the vehicle body; and
a power unit configured to generate a driving force for rotating the drive wheel.

According to the leaning vehicle battery of the thirteenth aspect, even after weight reduction is achieved in the leaning vehicle battery, the load bearing capability of the storage cell assembly case can be maintained, similarly to the leaning vehicle battery of any of the first to twelfth aspects.

A leaning vehicle of a fourteenth aspect is according to the leaning vehicle of the thirteenth aspect, in which,
the power unit includes an electric motor, and
the electric motor generates the driving force for rotating the drive wheel by means of electricity from the leaning vehicle battery.

The above-described object of the invention and other objects, features, aspects and advantages will be apparent from detailed descriptions of embodiments of the invention made with reference to attached drawings.

### ADVANTAGEOUS EFFECTS OF INVENTION

According to the present invention, the leaning vehicle battery can output a large voltage, and even after weight reduction is achieved in the leaning vehicle battery, the load bearing capability of the storage cell assembly case can be maintained.

### BRIEF DESCRIPTION OF DRAWINGS

[FIG. 1] FIG. 1 illustrates a view of a leaning vehicle 1 as viewed in a leaning-vehicle 1 rightward direction, an exterior perspective view of a leaning vehicle battery 9, and a sectional view of the leaning vehicle battery 9 taken along a line X-X.
[FIG. 2] FIG. 2 is an exterior perspective view of a vehicle body 2.
[FIG. 3A] FIG. 3A is a sectional structural view of the leaning vehicle 1 taken along a line Y-Y (see FIG. 2).
[FIG. 3B] FIG. 3B is an exterior perspective view of the leaning vehicle battery 9 with a storage-cell-assembly-case upper member 94 and a resin cover 100 removed.
[FIG. 4] FIG. 4 is an exterior perspective view of the leaning vehicle battery 9 with the storage-cell-assembly-case upper member 94 removed.
[FIG. 5] FIG. 5 is an exterior perspective view of the vehicle body 2 and the leaning vehicle battery 9 illustrating when the leaning vehicle battery 9 is to be attached to the vehicle body 2.
[FIG. 6] FIG. 6 illustrates a process of attaching the leaning vehicle battery 9 to the vehicle body 2.
[FIG. 7] FIG. 7 illustrates a process of attaching the leaning vehicle battery 9 to the vehicle body 2.
[FIG. 8] FIG. 8 illustrates a process of attaching the leaning vehicle battery 9 to the vehicle body 2.
[FIG. 9] FIG. 9 is an exterior perspective view of a leaning vehicle battery 9a.
[FIG. 10] FIG. 10 is a sectional view of the leaning vehicle battery 9a taken along a line Z-Z.
[FIG. 11] FIG. 11 is an exterior perspective view of a leaning vehicle battery 9b.
[FIG. 12] FIG. 12 is an exterior perspective view of a leaning vehicle battery 9c.
[FIG. 13] FIG. 13 is a sectional structural view of the leaning vehicle 1 provided with a leaning vehicle battery 9d taken along the line Y-Y.
[FIG. 14] FIG. 14 is a sectional structural view of the leaning vehicle 1 provided with a leaning vehicle battery 9e taken along the line Y-Y.
[FIG. 15] FIG. 15 is a sectional structural view of the leaning vehicle 1 provided with a leaning vehicle battery 9f taken along the line Y-Y.
[FIG. 16] FIG. 16 is a sectional structural view of the leaning vehicle 1 provided with a leaning vehicle battery 9g taken along the line Y-Y.

### DESCRIPTION OF EMBODIMENTS

### (Embodiments)

### [Overall Configuration]

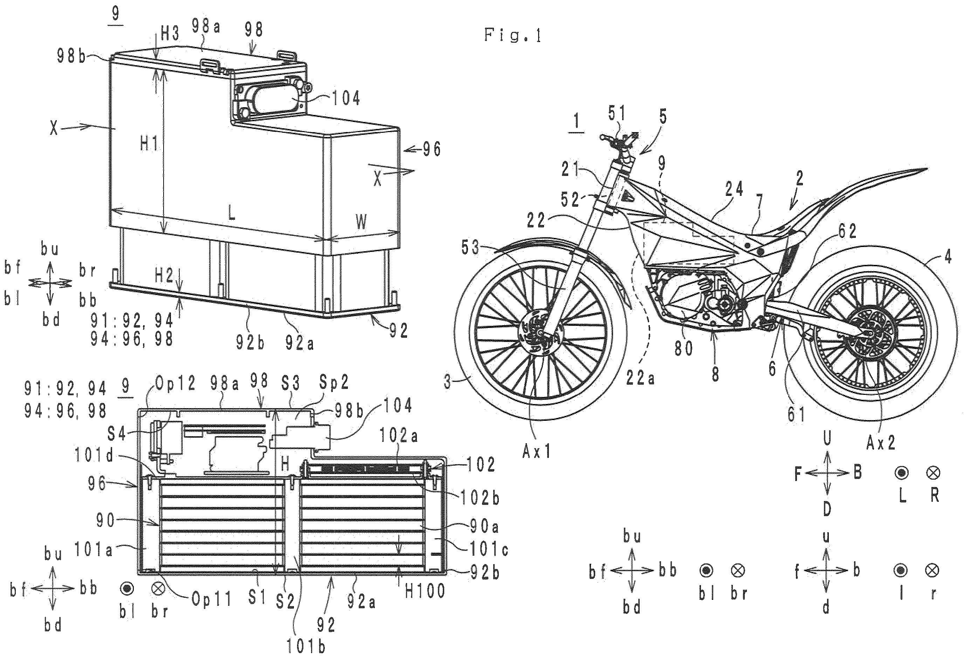

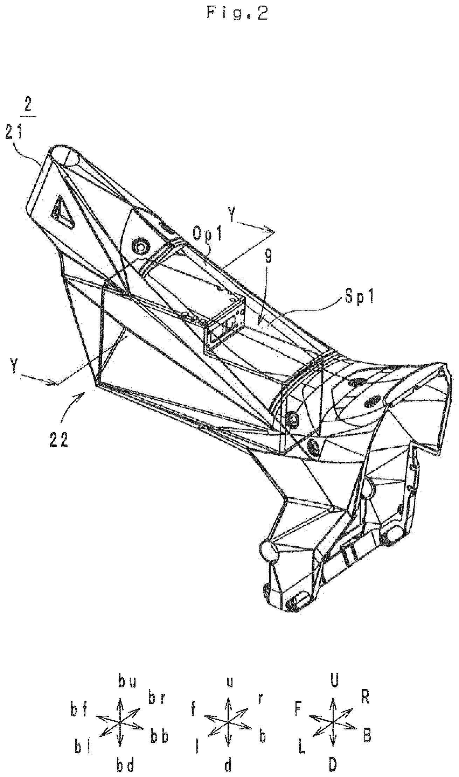

The overall configuration of a leaning vehicle according to an embodiment will now be described with reference to drawings. In the embodiment, a two-wheeled leaning electric vehicle that has a leanable vehicle body, one front wheel, and one rear wheel is illustrated as an example of the leaning vehicle. Such a leaning vehicle is a vehicle for trials. FIG. 1 illustrates a view of a leaning vehicle 1 as viewed in a leaning-vehicle 1 rightward direction, an exterior perspective view of a leaning vehicle battery 9, and a sectional view of the leaning vehicle battery 9 taken along a line X-X. In the exterior perspective view of the leaning vehicle battery 9 of FIG. 1, a storage-cell-assembly-case upper member 94 is separated from a storage-cell-assembly-case lower member 92. FIG. 2 is an exterior perspective view of a vehicle body 2. In FIG. 2, the leaning vehicle battery 9 contained in the vehicle body 2 is also illustrated.

Hereinafter, the leaning-vehicle 1 frontward direction is defined as the frontward direction "F". The leaning-vehicle 1 backward direction is defined as the backward direction "B". The leaning-vehicle 1 leftward direction is defined as the left "L". The leaning-vehicle 1 rightward direction is defined as the right "R". The leaning-vehicle 1 upward direction is defined as the upward direction "U". The leaning-vehicle 1 downward direction is defined as the downward direction "D". The leaning-vehicle 1 front-back direction is defined as the front-back direction "FB". The leaning-vehicle 1 left-right direction is defined as the left-right direction "LR". The leaning-vehicle 1 up-down direction is defined as the up-down direction "UD". The leaning-vehicle 1 frontward direction refers to the frontward direction with respect to a rider who straddles the leaning vehicle 1. The leaning-vehicle 1 backward direction refers to the backward direction with respect to the rider who straddles the leaning vehicle 1. The leaning-vehicle 1 leftward direction refers to the left with respect to the rider who straddles the leaning vehicle 1. The leaning-vehicle 1 rightward direction refers to the right with respect to the rider who straddles the leaning vehicle 1. The leaning-vehicle 1 upward direction refers to the upward direction with respect to the rider who straddles the leaning vehicle 1. The leaning-vehicle 1 downward direction refers to the downward direction with respect to the rider who straddles the leaning vehicle 1.

Further, in the leaning vehicle 1, the vehicle body 2 can lean in the leftward direction L and rightward direction R. When the vehicle body 2 leans to the leftward direction L and rightward direction R, the vehicle-body 2 up-down and left-right directions do not match the leaning-vehicle 1 up-down direction UD and the leaning-vehicle 1 left-right direction LR, respectively. On the other hand, the vehicle-body 2 up-down and left-right directions in an upright state match the leaning-vehicle 1 up-down direction UD and the leaning-vehicle 1 left-right direction LR, respectively. Hereinafter, the vehicle-body 2 frontward direction is defined as the frontward direction "f". The vehicle-body 2 backward direction is defined as the backward direction "b". The vehicle-body 2 leftward direction is defined as the left "l". The vehicle-body 2 rightward direction is defined as the right "r". The vehicle-body 2 upward direction is defined as the upward direction "u". The vehicle-body 2 downward direction is defined as the downward direction "d". The vehicle-body 2 front-back direction is defined as the front-back direction "fb". The vehicle-body 2 left-right direction is defined as the left-right direction "lr". The vehicle-body 2 up-down direction is defined as the up-down direction "ud".

Further, the leaning-vehicle-battery 9 frontward direction with the leaning vehicle battery 9 being mounted on the upright vehicle body 2 is defined as the frontward direction "bf". The leaning-vehicle-battery 9 backward direction with the leaning vehicle battery 9 being mounted on the upright vehicle body 2 is defined as the backward direction "bb". The leaning-vehicle-battery 9 leftward direction with the leaning vehicle battery 9 being mounted on the upright vehicle body 2 is defined as the left "bl". The leaning-vehicle-battery 9 rightward direction with the leaning vehicle battery 9 being mounted on the upright vehicle body 2 is defined as the right "br". The leaning-vehicle-battery 9 upward direction with the leaning vehicle battery 9 being mounted on the upright vehicle body 2 is defined as the upward direction "bu". The leaning-vehicle-battery 9 downward direction with the leaning vehicle battery 9 being mounted on the upright vehicle body 2 is defined as the downward direction "bd". The leaning-vehicle-battery 9 front-back direction with the leaning vehicle battery 9 being mounted on the upright vehicle body 2 is defined as the front-back direction "bfb". The leaning-vehicle-battery 9 left-right direction with the leaning vehicle battery 9 being mounted on the upright vehicle body 2 is defined as the left-right direction "blr". The leaning-vehicle-battery 9 up-down direction with the leaning vehicle battery 9 being mounted on the upright vehicle body 2 is defined as the up-down direction "bud".

As used herein, an axis or a member extending in the front-back direction does not necessarily refer to only an axis or a member that is parallel to the front-back direction. An axis or a member extending in the front-back direction refers to an axis or a member that is inclined within a range of ±45° with respect to the front-back direction. Similarly, an axis or a member extending in the up-down direction refers to an axis or a member that is inclined within a range of ±45° with respect to the up-down direction. An axis or a member extending in the left-right direction refers to an axis or a member that is inclined within a range of ±45° with respect to the left-right direction. Further, an "upright" state of the vehicle body 2 means a state in which the front wheel is not steering or leaning while a rider is not riding on the leaning vehicle 1 and there is no fuel in the leaning vehicle 1.

As used herein, a phrase "a first member is supported by a second member" includes both a case in which the first member is unmovably attached (i.e. fixed) to the second member and a case in which the first member is movably attached to the second member. Further, a phrase "a first member is supported by a second member" includes both a case in which the first member is directly attached to the second member and a case in which the first member is attached to the second member with an intervening third member.

As used herein, a phrase "a first member and a second member lined up in the front-back direction" indicates the following state: when the first member and the second member are viewed in the direction perpendicular to the front-back direction, both the first and second member are positioned on any straight line indicative of the front-back direction. As used herein, a phrase "a first member and a second member lined up in the front-back direction as viewed in the up-down direction" indicates the following state: when the first member and the second member are viewed in the up-down direction, both the first and second members are positioned on any straight line indicative of the front-back direction. In this case, when the first member and the second member are viewed in the left-right direction, which is different from the up-down direction, either one of the first member and the second member may not be positioned on any straight line indicative of the front-back direction. Further, the first member and the second member may be in contact with each other. The first member and the second member may be spaced each other. A third member may be interposed between the first member and the second member. These definitions apply to other directions than the front-back direction.

As used herein, a phrase "a first member is disposed in front of a second member" indicates the following state: at least part of the first member is disposed within an area in which the second member passes when the second member is translated in the frontward direction. Therefore, the first member may be fit within the area in which the second member passes when the second member is translated in the frontward direction or may protrude from the area in which the second member passes when the second member is translated in the frontward direction. In this case, the first member and the second member are aligned in the front-back direction. These definitions apply to other directions than the front-back direction.

As used herein, a phrase "a first member is disposed in front of a second member as viewed in the left-right direction" indicates the following state: the first member and the second member are aligned in the front-back direction and a portion of the first member opposed to the second member is disposed in front of the second member as viewed in the left-right direction. In these definitions, the first member and the second member may not three-dimensionally are aligned in the front-back direction. These definitions apply to other directions than the front-back direction.

As used herein, a phrase "a first member is disposed further forward than a second member" indicates the following state: The first member is disposed in front of a plane that passes a front end of the second member and is perpendicular to the front-back direction. In this case, the first member and the second member may or may not are aligned in the front-back direction. These definitions apply to other directions than the front-back direction.

Unless otherwise noted, portions of a first member are defined herein as follows. A front portion of the first member refers to a front half of the first member. A rear portion of the first member refers to a rear half of the first member. A left portion of the first member refers to a left half of the first member. A right portion of the first member refers to a right half of the first member. An upper portion of the first member refers to an upper half of the first member. A lower portion of the first member refers to a lower half of the first member. An upper end of the first member refers to an end of the first member in the upward direction. A lower end of the first member refers to an end of the first member in the downward direction. A front end of the first member refers to an end of the first member in the forward direction. A rear end of the first member refers to an end of the first member in the backward direction. A left end of the first member refers to an end of the first member in the leftward direction. A right end of the first member refers to an end of the first member in the rightward direction. An upper end portion of the first member refers to the upper end and its vicinity of the first member. A lower end portion of the first member refers to the lower end and its vicinity of the first member. A front end portion of the first member refers to the front end and its vicinity of the first member. A rear end portion of the first member refers to the rear end and its vicinity of the first member. A left end portion of the first member refers to the left end and its vicinity of the first member. A right end portion of the first member refers to the right end and its vicinity of the first member. The first member refers to a member constituting the leaning vehicle 1.

As used herein, a phrase "a component (a member, a space or an opening) is formed (located or provided) between a first member and a second member" means that the component is present between the first member and the second member in the direction in which the first member and the second member are aligned. It is to be noted that the component may or may not protrude from the first member or the second member in the direction perpendicular to the direction in which the first member and the second member are aligned.

As illustrated in FIG. 1, the leaning vehicle 1 includes the vehicle body 2, a front wheel 3, a rear wheel 4, a steering mechanism 5, a suspension 6, a seat 7, a power unit 8, and the leaning vehicle battery 9. The vehicle body 2 leans to the leftward direction L when the leaning vehicle 1 turns in the leftward direction L. The vehicle body 2 leans to the rightward direction R when the leaning vehicle 1 turns in the rightward direction R. The vehicle body 2 includes a fiber reinforced resin made of a resin (such as an epoxy resin, vinyl ester, a phenolic resin, polyamide, polypropylene, and polyphenylene sulfide) reinforced with fibers (such as carbon fibers and glass fibers). In the embodiment, the vehicle body 2 is made of a carbon fiber reinforced resin, which is a resin reinforced with a fiber sheet containing carbon fibers. The vehicle body 2 supports the front wheel 3, the rear wheel 4, the steering mechanism 5, the suspension 6, the seat 7, the power unit 8, and the leaning vehicle battery 9. The vehicle body 2 includes a steering mechanism support portion 21, a battery container 22, and a lid 24.

The steering mechanism support portion 21 supports the steering mechanism 5, which will be described later. The steering mechanism support portion 21 is a head pipe. The steering mechanism support portion 21 is on a front end portion of the vehicle body 2. The steering mechanism support portion 21 is a cylinder with its central axis extending in the up-down direction ud, as illustrated in FIG. 2. It is to be noted that the steering mechanism support portion 21 is slightly inclined with respect to the up-down direction ud such that the upper end portion of the steering mechanism support portion 21 is located further backward in the backward direction b than the lower end portion of the steering mechanism support portion 21 as viewed in a leftward direction l or rightward direction r.

As illustrated in FIG. 2, the battery container 22 forms a battery containing space Sp1 for containing the leaning vehicle battery 9 along with the lid 24 (see FIG. 1). As viewed in a downward direction d, the battery container 22 is disposed behind the steering mechanism support portion 21 in the backward direction b. As viewed in a leftward direction 1, the battery container 22 has an L-shape rotated at 90° in a counterclockwise direction.

As illustrated in FIG. 2, a battery insertion opening Op1 is provided on an upper face of the battery container 22. The battery insertion opening Op1 is located between the front wheel 3 (as detailed later) and the rear wheel 4 (as detailed later) in the front-back direction fb. As viewed in a downward direction d, the battery insertion opening Op1 has a rectangular shape with a long side extending in the front-back direction fb and a short side extending in the left-right direction lr. As illustrated in FIG. 2, a front end of the battery insertion opening Op1 is located further upward in the upward direction u than a rear end of the battery insertion opening Op1. The battery insertion opening Op1 connects the inside of the battery containing space Sp1 with the outside of the battery containing space Sp1.

As illustrated in FIG. 1, the lid 24 is attached to the upper face of the battery container 22 to close the battery insertion opening Op1. The lid 24 has a attachable and dettachable structure from the battery container 22. In the embodiment, the lid 24 is fixed to the battery container 22 with four screws.

The power unit 8 generates a driving force for rotating the rear wheel 4, which will be described later. As illustrated in FIG. 1, the power unit 8 includes an electric motor 80 and a reduction gear (not illustrated). The electric motor 80 generates the driving force by means of electricity from the leaning vehicle battery 9, which will be described later. The reduction gear transmits the driving force generated by the power unit 8 to the rear wheel 4, which will be described later. The power unit is retained by the battery container 22. Specifically, the power unit 8 is disposed below the battery container 22 in the downward direction d. The power unit 8 is thus retained by a lower face of the battery container 22. In this way, the power unit 8 is disposed below the leaning vehicle battery 9 in the downward direction d.

The steering mechanism 5 is located around the steering mechanism support portion 21. The steering mechanism 5 is operated by a rider to steer the front wheel 3. As illustrated in FIG. 1, the steering mechanism 5 includes a handlebar 51, a steering shaft 52, and a front fork 53. The handlebar 51 is operated by the rider. The steering shaft 52 is inserted in the steering mechanism support portion 21. In this way, the steering shaft 52 is supported by the vehicle body 2 such that the rider operates the handlebar 51 to rotate the steering shaft 52 about the central axis of the steering shaft 52.

The front fork 53 is fixed to the lower end portion of the steering shaft 52. As viewed in a backward direction b, the front fork 53 has a structure bisected to the left direction 1 and right direction r from the lower end portion of the steering shaft 52. The front wheel 3 is supported by the lower end portions of the front fork 53 so as to be rotatable about a front axle Ax1. Accordingly, the front wheel 3 is supported by the vehicle body 2 via the steering mechanism 5. The rider can operate the handlebar 51 to steer the front wheel 3. In other words, the front wheel 3 is a steerable wheel. Further, the front wheel 3 is located in the front portion of the leaning vehicle 1.

The suspension 6 is supported by the vehicle body 2. The suspension 6 supports the rear wheel 4. As illustrated in FIG. 1, the suspension 6 includes swing arms 61 and a shock absorber 62. As viewed in a rightward direction r, the swing arms 61 extend backward in the backward direction from the battery container 22. The swing arms 61 are supported by the battery container 22 so as to swing about an axis passing front end portions of the swing arms 61 in the left-right direction lr. In this way, rear end portions of the swing arms 61 can move in the up-down direction ud with respect to the battery container 22.

The rear wheel 4 is a drive wheel of the leaning vehicle 1. Accordingly, the rear wheel 4 is rotated by the driving force generated by the power unit 8. The rear wheel 4 is supported by the battery container 22 via the swing arms 61. Specifically, the rear wheel 4 is supported by the rear end portions of the swing arms 61 so as to be rotatable about a rear axle Ax2. In this way, the swing arms 61 can swing to cause the rear wheel 4 to move in the up-down direction ud with respect to the battery container 22. Further, the rear wheel 4 is located in the rear portion of the leaning vehicle 1.

The shock absorber 62 supports the rear wheel 4 so as to absorb a movement of the rear wheel 4 in the up-down direction ud with respect to the vehicle body 2. An upper end portion of the shock absorber 62 is supported by the vehicle body 2. A lower end portion of the shock absorber 62 is supported by the swing arms 61. In this way, the shock absorber 62 supports the rear wheel 4 via the swing arms 61. The shock absorber 62 is a combination of a damper and a spring and can extend and contract in the up-down direction ud. The shock absorber 62 absorbs the swing of the swing arms 61 with respect to the vehicle body 2 to absorb the movement of the rear wheel 4 with respect to the vehicle body 2 in the up-down direction ud.

The seat 7 is supported by the rear portion of the battery container 22. The seat 7 is for the rider to seat himself/herself on. In this way, the rider straddles the vehicle body 2.

### [Structure of Leaning Vehicle Battery]

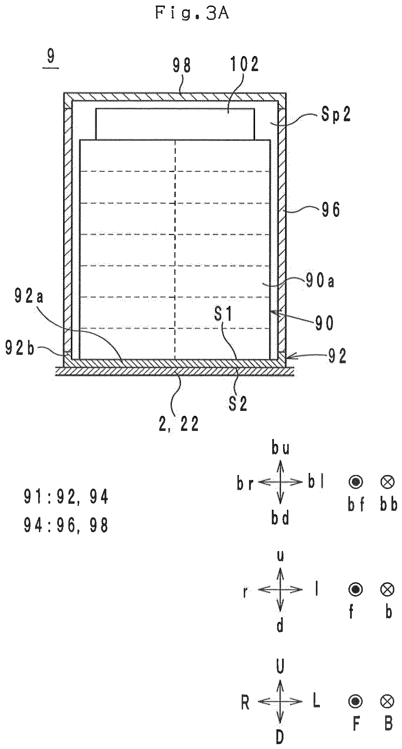

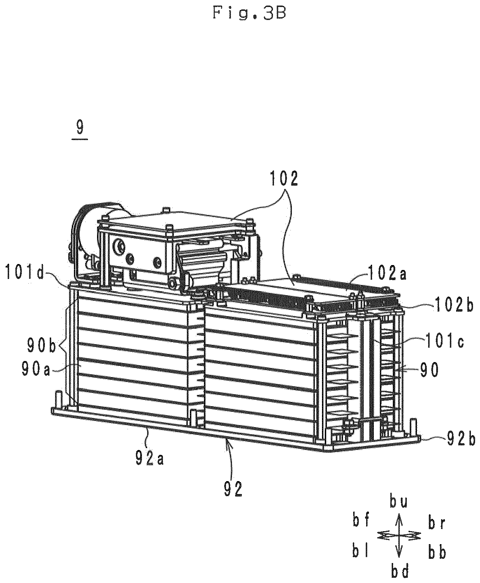

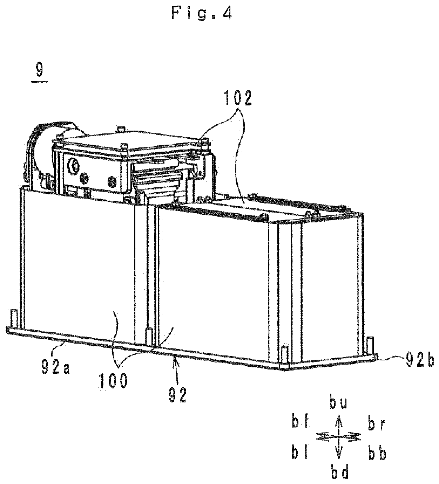

The leaning vehicle battery 9 will now be described with reference to drawings. FIG. 3A is a sectional structural view of the leaning vehicle 1 taken along a line Y-Y (see FIG. 2). In FIG. 3A, a resin cover 100 is omitted. Further, since FIG. 3A is a schematic, dimensions in FIG. 3A do not necessarily match dimensions in other drawings. FIG. 3B is an exterior perspective view of the leaning vehicle battery 9 with the storage-cell-assembly-case upper member 94 and the resin cover 100 removed. FIG. 4 is an exterior perspective view of the leaning vehicle battery 9 with the storage-cell-assembly-case upper member 94 removed.

Hereinafter, as illustrated in FIG. 3A, a surface of the leaning vehicle battery 9 supported by the vehicle body 2 of the leaning vehicle 1 from below in the up-down direction ud at the time when the leaning vehicle battery 9 is mounted on the upright vehicle body 2 is defined as a bottom surface of the leaning vehicle battery 9. The bottom surface of the leaning vehicle battery 9 may be fixed to the vehicle body 2 or may not be fixed to the vehicle body 2. In the embodiment, the bottom surface of the leaning vehicle battery 9 is not fixed to the vehicle body 2.

The leaning vehicle battery 9 is an electric power supply for the leaning vehicle 1. The leaning vehicle battery 9 supplies electric power to the electric motor 80. The leaning vehicle battery 9 is a secondary battery, for example, a lithium ion battery. As illustrated in FIG. 1, the leaning vehicle battery 9 includes a storage cell assembly 90, a storage cell assembly case 91, the resin cover 100 (see FIG. 4), support members 101a to 101c, a plate-like member 101d, a circuit section 102, and a connector 104.

The storage cell assembly 90 includes a plurality of storage cells 90a. In the embodiment, storage cell assembly 90 includes 28 storage cells 90a. The storage cells 90a each have a flat shape. Specifically, as viewed in a downward direction bd, the storage cell 90a has a plate shape with a main surface having a rectangular shape. Such a flat shape refers to a shape in which the size of the storage cell 90a in the up-down direction bud is much smaller than the size of the storage cell 90a in the front-back direction bfb and the size of the storage cell 90a in the left-right direction blr. The storage cell 90a includes multiple sheets of positive electrode (not illustrated), multiple sheets of separator (not illustrated), multiple sheets of negative electrode (not illustrated), an electrolyte, and laminate films (not illustrated). The multiple sheets of positive electrode and the multiple sheets of negative electrode are alternately aligned on top of another in the up-down direction bud. The multiple sheets of separator are disposed between the positive electrodes and the negative electrodes. The multiple sheets of positive electrode, the multiple sheets of negative electrode, the multiple sheets of separator, and the electrolyte are packed by the laminate films. The laminate films are sealed.

The storage cell assembly 90 has a structure in which the plurality of storage cells 90a are stacked together in a stacked direction. Such a structure in which the plurality of storage cells 90a are stacked together in a stacked direction refers to a structure in which the plurality of storage cells 90a are aligned in the stacked direction such that the main surfaces of two storage cells 90a adjacent in the stacked direction are opposed to each other in the stacked direction. It is to be noted that the main surfaces of the two storage cells 90a adjacent in the stacked direction may be or may not be in contact with each other. Accordingly, for example, a metal sheet may be provided between the two storage cells 90a adjacent in the stacked direction. The stacked direction refers to the up-down direction bud. As illustrated in FIG. 3B, the storage cell assembly 90 includes four storage cell subassemblies 90b (three storage cell subassemblies 90b are visible in FIG. 3B). The storage cell subassemblies 90b each have a structure in which seven storage cells 90a are stacked in the up-down direction bud. As viewed in the downward direction bd, the storage cell subassembly 90b is arranged such that the long sides of the storage cell 90a are in parallel to the front-back direction bfb and the short sides of the storage cell 90a are in parallel to the left-right direction blr. Further, as viewed in the downward direction bd, the four storage cell subassemblies 90b are arranged in a matrix of 2 rows by 2 columns. The direction of the row refers to the front-back direction bfb. The direction of the column refers to the left-right direction blr.

In the storage cell assembly 90 thus configured, the plurality of storage cells 90a are connected in series. In the embodiment, 28 storage cells 90a are connected in series. The storage cells 90a can each output a voltage of 4 V. Accordingly, the storage cell assembly 90 can each output a voltage of 112 V.

As illustrated in FIG. 1, the storage cell assembly case 91 forms a storage-cell-assembly containing space Sp2 for containing the storage cell assembly 90, the resin cover 100, and the circuit section 102. The storage-cell-assembly containing space Sp2 is a closed space surrounded by inner peripheral faces of the storage cell assembly case 91. The storage cell assembly case 91 has a box shape. A size W of the storage cell assembly case 91 in the left-right direction blr is smaller than a size L of the storage cell assembly case 91 in the front-back direction bfb and a size H of the storage cell assembly case 91 in the up-down direction bud. Further, the size L of the storage cell assembly case 91 in the front-back direction bfb is larger than the size H of the storage cell assembly case 91 in the up-down direction bud. The size L of the storage cell assembly case 91 in the front-back direction bfb is equal to the maximum value of the size of the storage cell assembly case 91 in the front-back direction bfb. The size W of the storage cell assembly case 91 in the left-right direction blr is equal to the maximum value of the size of the storage cell assembly case 91 in the left-right direction blr. The size H of the storage cell assembly case 91 in the up-down direction bud is equal to the maximum value of the size of the storage cell assembly case 91 in the up-down direction bud. The storage cell assembly case 91 includes the storage-cell-assembly-case lower member 92 and the storage-cell-assembly-case upper member 94.

As illustrated in FIG. 3B, the storage-cell-assembly-case lower member 92 has a tray shape. The storage-cell-assembly-case lower member 92 includes a bottom section 92a and side sections 92b. As illustrated in FIG. 1, the bottom section 92a has a plate shape with a first main surface S1 and a second main surface S2. The first main surface S1 refers to an upper face of the bottom section 92a. The storage cell assembly 90 is mounted on the first main surface S1. Consequently, the first main surface S1 receives a load downward (bd) from the storage cell assembly 90. In other words, the first main surface S1 is pressed downward (bd) by the storage cell assembly 90. The first main surface S1 may not directly receive a load from the storage cell assembly 90. Accordingly, the first main surface S1 may receive a load from the storage cell assembly 90 with an intervening member other than the storage cell assembly 90. In the embodiment, the first main surface S1 directly receives a load downward (bd) from the storage cell assembly 90. The second main surface S2 refers to a bottom surface of the bottom section 92a. The second main surface S2 refers also to a bottom surface of the leaning vehicle battery 9 supported from below in the up-down direction bud by the vehicle body 2 of the leaning vehicle 1. Accordingly, as illustrated in FIG. 3A, the second main surface S2 is in contact with the vehicle body 2 from below in the up-down direction ud at the time when the leaning vehicle battery 9 is mounted on the upright vehicle body 2. As viewed in the downward direction bd, the bottom section 92a has a rectangular shape. The long sides of the bottom section 92a are in parallel to the front-back direction bfb. The short sides of the bottom section 92a are in parallel to the left-right direction blr. As described above, the storage cell assembly 90 is mounted on the first main surface S1 and the second main surface S2 is brought into contact with the vehicle body 2. Accordingly, the storage cell assembly 90, the bottom section 92a, and part of the vehicle body 2 are arranged in this order toward downward direction bd. In other words, as viewed in the downward direction bd, the storage cell assembly 90, the bottom section 92a, and the part of the vehicle body 2 are overlapped.

The side sections 92b are each a portion of the storage-cell-assembly-case lower member 92 that is located further upward in the upward direction bu than the first main surface S1. Side sections 91a are each formed by part of the storage-cell-assembly-case lower member 92 bent upward in the upward direction bu from an outer edge of the bottom section 92a. As viewed in the downward direction bd, the side sections 92b surround the first main surface S1. As illustrated in FIG. 1, the size of the side section 91a in the up-down direction bud is much smaller than the size of the leaning vehicle battery 9 in the up-down direction bud. It is to be noted that the sizes of the side sections 91a in the up-down direction bud are uniform.

The storage-cell-assembly-case lower member 92 has a structure that is inseparable into two or more sub-members. The fact that the storage-cell-assembly-case lower member 92 cannot be separated into two or more sub-members by a user means that the user cannot separate the storage-cell-assembly-case lower member 92 without destroying it into two or more sub-members that are smaller than the storage-cell-assembly-case lower member 92. Accordingly, the storage-cell-assembly-case lower member 92 is made by bending a single metal sheet. The storage-cell-assembly-case lower member 92 may also be made from two or more metal sheets joined by welding or bonding. A material for such a storage-cell-assembly-case lower member 92 is iron.

The storage-cell-assembly-case upper member 94 has a rectangular parallelepiped box shape. As viewed in the leftward direction 1 or rightward direction r, the storage-cell-assembly-case upper member 94 has an L-shape. Accordingly, a step is formed on an upper face of the storage-cell-assembly-case upper member 94. As a result, the size of the front portion of storage-cell-assembly-case upper member 94 in the up-down direction bud is larger than the size of the rear portion of the storage-cell-assembly-case upper member 94 in the up-down direction bud.

An opening Op11 is also provided on the storage-cell-assembly-case upper member 94. The opening Op11 is located on the lower face of the storage-cell-assembly-case upper member 94. As viewed in an upward direction bu, the shape of the opening Op11 on the storage-cell-assembly-case upper member 94 matches the shape of the side section 92b. Accordingly, the storage-cell-assembly-case upper member 94 is disposed above the storage-cell-assembly-case lower member 92 in the upward direction bu and fixed to the storage-cell-assembly-case lower member 92. The fixation is made by a fastener such as a screw, for example. In this way, the storage-cell-assembly-case upper member 94 covers front, rear, left, right, and upper faces of the storage cell assembly 90. As a result, as viewed in any of a frontward direction bf, a backward direction bb, a leftward direction bl, a rightward direction br, the upward direction bu, and the downward direction bd, the storage-cell-assembly-case upper member 94 and the storage-cell-assembly-case lower member 92 contains the storage cell assembly 90 such that the storage cell assembly 90 is invisible.

The storage-cell-assembly-case upper member 94 includes a storage-cell-assembly-case upper-sub-member 96 and a storage-cell-assembly-case upper-sub-member 98. The storage-cell-assembly-case upper member 94 has a structure separable into the storage-cell-assembly-case upper-sub-member 96 and the storage-cell-assembly-case upper-sub-member 98. The fact that a user can separate the storage-cell-assembly-case upper member 94 into the storage-cell-assembly-case upper-sub-member 96 and the storage-cell-assembly-case upper-sub-member 98 means that the user can separate the storage-cell-assembly-case upper member 94 without destroying it into the storage-cell-assembly-case upper-sub-member 96 and the storage-cell-assembly-case upper-sub-member 98 that are smaller than the storage-cell-assembly-case upper member 94. Accordingly, the storage-cell-assembly-case upper-sub-member 98 is fixed to the storage-cell-assembly-case upper-sub-member 96 by a fastening member such as a screw. The storage-cell-assembly-case upper-sub-member 96 may not be fixed to the storage-cell-assembly-case upper-sub-member 98 by welding or bonding. However, an adhesive may be used to reinforce the fixation by the fastening member such as a screw.

The storage-cell-assembly-case upper-sub-member 96 has a rectangular parallelepiped box shape. As viewed in the leftward direction 1 or rightward direction r, the storage-cell-assembly-case upper-sub-member 96 has an L-shape. The openings Op11 and Op12 are provided on the storage-cell-assembly-case upper-sub-member 96. The opening Op12 is located on a front portion of an upper face of the storage-cell-assembly-case upper-sub-member 96. The opening Op11 has been described, and therefore further description will be omitted. The storage-cell-assembly-case upper-sub-member 96 as described above is fixed to the storage-cell-assembly-case lower member 92.

The storage-cell-assembly-case upper-sub-member 98 has a tray shape. The storage-cell-assembly-case upper-sub-member 98 includes an upper face portion 98a and side sections 98b. The upper face portion 98a is a plate that has a third main surface S3 and a fourth main surface S4. The third main surface S3 is an upper face of the upper face portion 98a. The fourth main surface S4 is a lower face of the upper face portion 98a. As viewed in the downward direction bd, the upper face portion 98a has a rectangular shape. A long side of the upper face portion 98a is in parallel to the front-back direction bfb. A short side of the upper face portion 98a is in parallel to the left-right direction blr.

The side sections 98b are portions located further downward (bd) than the fourth main surface S4 in the storage-cell-assembly-case upper-sub-member 98. The side sections 98b are each formed by part of the storage-cell-assembly-case upper-sub-member 98 bent downward (bd) from an outer edge of the upper face portion 98a. As viewed in the upward direction bu, the side sections 98b surround the fourth main surface S4. As illustrated in FIG. 1, the size of the side section 98b in the up-down direction bud is much smaller than the size of the leaning vehicle battery 9 in the up-down direction bud. It is to be noted that the sizes of the side sections 98b in the up-down direction bud are uniform.

The storage-cell-assembly-case upper-sub-member 98 is fixed to the storage-cell-assembly-case upper-sub-member 96 so as to close the opening Op12. In this way, the storage-cell-assembly-case upper-sub-member 98 is disposed further upward in the upward direction bu than the storage-cell-assembly-case upper-sub-member 96.

A material for the storage-cell-assembly-case upper member 94 as described above is aluminum. Accordingly, the material for the storage-cell-assembly-case upper member 94 is different from the material for the storage-cell-assembly-case lower member 92. Specifically, the specific gravity of the material for the storage-cell-assembly-case upper member 94 is smaller than the specific gravity of the material for the storage-cell-assembly-case lower member 92.

Now a description will be made as to sizes of the storage-cell-assembly-case lower member 92, the storage-cell-assembly-case upper-sub-member 96, and the storage-cell-assembly-case upper-sub-member 98. Hereinafter, the size of the storage-cell-assembly-case upper-sub-member 96 in the up-down direction bud is defined as a size H1. The size of the storage-cell-assembly-case lower member 92 in the up-down direction bud is defined as a size H2. The size of the storage-cell-assembly-case upper-sub-member 98 in the up-down direction bud is defined as a size H3.

The size H1 is equal to an average value of distances in the up-down direction bud from portions of outer edges of the opening Op11 to the upper end of the storage-cell-assembly-case upper-sub-member 96. In the embodiment, the openings Op11 and Op12 are located on a plane perpendicular to the up-down direction bud. Accordingly, the opening Op12 is located on the upper end of the storage-cell-assembly-case upper-sub-member 96. Therefore, the size H1 is equal to the distance in the up-down direction bud from the opening Op11 to the opening Op12 of the storage-cell-assembly-case upper-sub-member 96 with the leaning vehicle battery 9 being mounted on the upright vehicle body 2.

The size H2 is equal to an average value of distances in the up-down direction bud from the second main surface S2 to portions of upper edges of the side sections 92b. In the embodiment, a plane formed by the upper edges of the side sections 92b is perpendicular to the up-down direction bud. Accordingly, any upper edge of the side sections 92b is an upper end of the storage-cell-assembly-case lower member 92. Therefore, the size H2 is equal to the distance in the up-down direction bud from the second main surface S2 to the upper end of the storage-cell-assembly-case lower member 92 with the leaning vehicle battery 9 being mounted on the upright vehicle body 2.

The size H3 is equal to an average value of distances in the up-down direction bud from the third main surface S3 to portions of lower edges of the side sections 98b. In the embodiment, the lower edges of the side sections 98b are perpendicular to the up-down direction bud. Accordingly, any lower edge of side sections 98b coincides with the lower end of the storage-cell-assembly-case upper-sub-member 98. Therefore, the size H3 is equal to the distance in the up-down direction bud from the third main surface S3 to the lower end of the storage-cell-assembly-case upper-sub-member 98 with the leaning vehicle battery 9 being mounted on the upright vehicle body 2.

The size H1 of at least one storage-cell-assembly-case upper-sub-member 96 of two or more storage-cell-assembly-case upper-sub-members 96 and 98 in the up-down direction bud is larger than the size H2 of the storage-cell-assembly-case lower member 92 in the up-down direction bud, the storage-cell-assembly-case lower member 92 including the plate-shaped bottom section 92a that has the first surface S1, which receives a load from the storage cell assembly 90 in the downward direction bd, and the second main surface S2, which is the bottom surface of the leaning vehicle battery 9, supported by the vehicle body 2 of the leaning vehicle 1 from below in the up-down direction bud. The total of the size H1 and the size H3 is larger than the size H2. The size H1 is larger than the size H3. Further, the size H3 is larger than the size H2. However, the size H3 may be larger than the size H2, may be equal to the size H2, or may be smaller than the size H2.

Further, the size of the storage cell 90a in the up-down direction bud, which is disposed on the lowermost position in the downward direction bu in the plurality of storage cells 90a is defined as a size H100. The size H100 is larger than the size H2.

As illustrated in FIG. 1, the support members 101a to 101c and the plate-like member 101d serve to fix the storage cell assembly 90 to the storage-cell-assembly-case lower member 92. The support members 101a to 101c are bar-shaped members extending in the up-down direction bud. The support member 101a is disposed in front of the storage cell assembly 90 in the forward direction bf. The support member 101b is disposed between the front portion of the storage cell assembly 90 and the rear portion of the cell assembly. The support member 101c is disposed behind the storage cell assembly 90 in the backward direction bb. Lower ends of the support members 101a to 101c are fixed to the storage-cell-assembly-case lower member 92.

The plate-like member 101d is disposed on the storage cell assembly 90. Upper ends of the support members 101a to 101c are fixed to the plate-like member 101d. In this way, the storage cell assembly 90 is held by the support members 101a to 101c and the plate-like member 101d. As a result, the storage cell assembly 90 is fixed to the storage-cell-assembly-case lower member 92 via the support members 101a to 101c and the plate-like member 101d.

As illustrated in FIG. 4, the resin cover 100 covers front, rear, left, and right faces of the storage cell assembly 90 (not illustrated in FIG. 4). The resin cover 100 supports the storage cell assembly 90.

The circuit section 102 is a battery management system. The battery management system is a system that indicates the total voltage and a remaining capacity of the leaning vehicle battery 9 in real time and monitors input/output current as well as voltage, temperature, or the like of each of the storage cells 90a to manage the leaning vehicle battery 9. The battery management system issues a warning on overdischarge and overcharge, and controls a dedicated charger. The circuit section 102 is provided on an upper face of the storage cell assembly 90. The circuit section 102 is made up of a combination of ICs, circuit boards, electronic components, and the like. In particular, a rear portion of the circuit section 102 is made up of a combination of circuit boards 102a and 102b, ICs, and electronic components. The circuit board 102a is disposed above the circuit board 102b in the upward direction bu. A lower face of the circuit board 102a opposes an upper face of the circuit board 102b. The ICs and electronic components are mounted on the lower face of the circuit board 102a and the upper face of the circuit board 102b. However, the ICs and electronic components are not mounted on an upper face of the circuit board 102a and a lower face of the circuit board 102b.

A connector (not illustrated) of a charger or a connector (not illustrated) of the leaning vehicle 1 is to be connected to the connector 104. Charging and discharging of the leaning vehicle battery 9 is accomplished through the connector 104. The connector 104 is disposed on the step provided on the upper face of the storage-cell-assembly-case upper member 94. The connector 104 is provided on a face that is formed by the step and directs toward the backward direction bb.

### [Attachment and Removal of Battery]

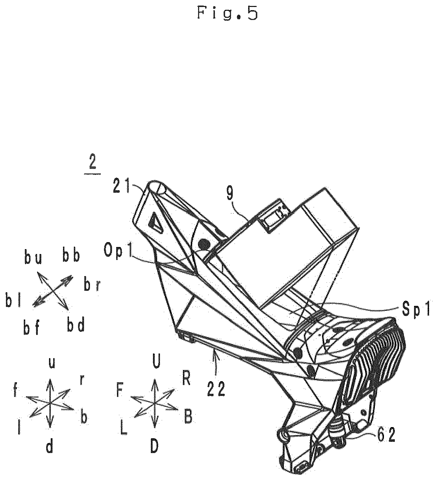

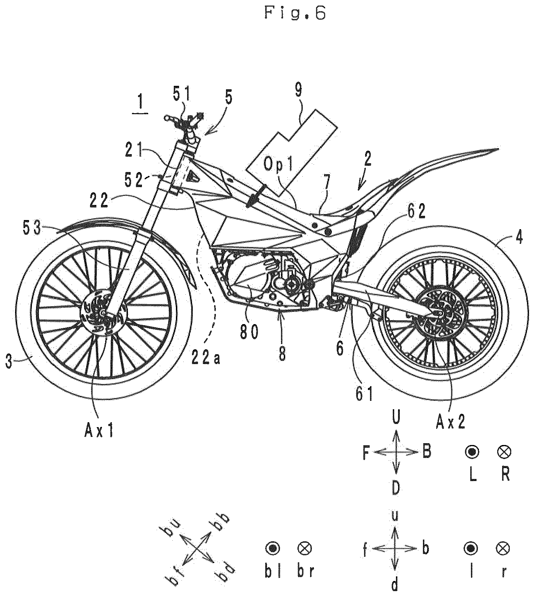

Attachment and removal of the leaning vehicle battery 9 to and from the vehicle body 2 will now be described with reference to drawings. FIG. 5 is an exterior perspective view of the vehicle body 2 and the leaning vehicle battery 9 illustrating when the leaning vehicle battery 9 is to be attached to the vehicle body 2. FIGS. 6 to 8 illustrate a process of attaching the leaning vehicle battery 9 to the vehicle body 2.

As illustrated in FIG. 5, a user places the leaning vehicle battery 9 above the battery insertion opening Op1 in the upward direction u. At this time, the user holds the leaning vehicle battery 9 in an inclined manner such that the front face of the leaning vehicle battery 9 directs toward a lower-front direction fd, as illustrated in FIG. 5.

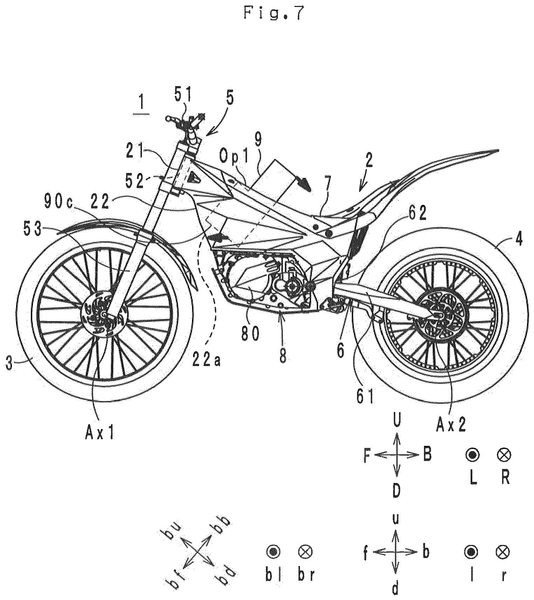

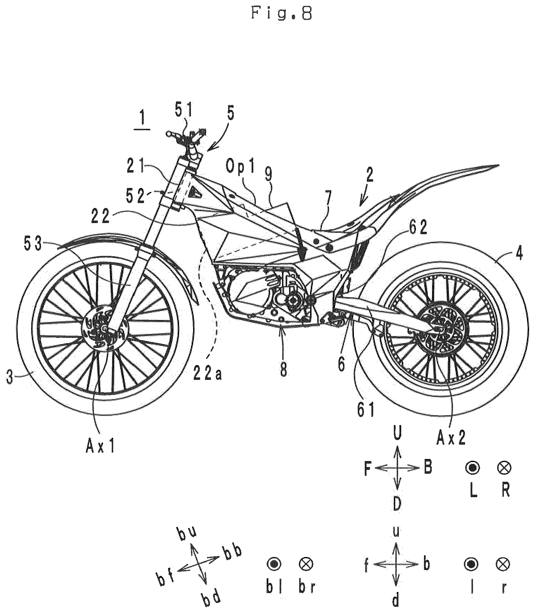

Next, as illustrated in FIG. 6, the user moves the leaning vehicle battery 9 in the frontward direction bf. In this way, the leaning vehicle battery 9 is inserted into the battery container 22. Then, a lower end of the front face of the leaning vehicle battery 9 comes into contact with a bottom surface of the battery container 22, as illustrated in FIG. 7. While the user slides the leaning vehicle battery 9 in the frontward direction f, the user turns the leaning vehicle battery 9 about the lower end of the front face of the leaning vehicle battery 9 in a clockwise direction as viewed in the rightward direction r. In this way, as illustrated in FIG. 8, the front face of the leaning vehicle battery 9 comes into contact with a battery container front 22a. Next, the user turns the leaning vehicle battery 9 about the lower end of the front face of the leaning vehicle battery 9 in a clockwise direction as viewed in the rightward direction r. In this way, as illustrated in FIG. 1, the bottom surface of the leaning vehicle battery 9 comes into contact with the bottom surface of the battery container 22. At this time, the up-down direction bud matches the up-down direction ud. The left-right direction blr matches the left-right direction lr. The front-back direction bfb matches the front-back direction fb. Lastly, the user attaches the lid 24 to the battery container 22. The lid 24 comes into contact with the storage-cell-assembly-case upper member 94. In this way, the leaning vehicle battery 9 is prevented from being displaced in the up-down direction ud. In the steps described above, the leaning vehicle battery 9 is attached to the vehicle body 2. A process of removing the leaning vehicle battery 9 from the vehicle body 2 is accomplished in the process, in a reverse order, of attaching the leaning vehicle battery 9 to the vehicle body 2, and therefore, the description thereof will be omitted.

### [Advantages]

(a) The leaning vehicle battery 9 includes the storage cell assembly 90 that includes a plurality of storage cells 90a. With the storage cells 90a connected in series, the leaning vehicle battery 9 can output a large voltage.
(b) In the leaning vehicle battery 9, even after weight reduction is achieved in the leaning vehicle battery 9, the load bearing capability of the storage cell assembly case 91 can be maintained. Specifically, the leaning vehicle 1 makes a large movement in the up-down direction UD. Consequently, the bottom section 92a of the storage cell assembly case 91 in the leaning vehicle 1 is likely to receive a load from the storage cell assembly 90. Therefore, the rigidity of the bottom section 92a of the storage cell assembly case 91 may desirably be increased.
   Accordingly, in the leaning vehicle battery 9, the storage cell assembly case 91 has the structures (A) and (B).
   (A) The storage cell assembly case 91 includes: a storage-cell-assembly-case lower member 92 including a bottom section 92a having a plate shape, the storage-cell-assembly-case lower member 92 having a structure that is inseparable into two or more sub-members, the bottom section 92a including: a first main surface S1 that receives a load from the storage cell assembly 90 in the downward direction bd; and a second main surface S2, which is the bottom surface of the leaning vehicle battery 9; and a storage-cell-assembly-case upper member 94 disposed above the storage-cell-assembly-case lower member 92 in the upward direction bu and fixed to the storage-cell-assembly-case lower member 92, the storage-cell-assembly-case upper member 94 having a structure that is separable into two or more storage-cell-assembly-case upper-sub-members 96 and 98.
   (B) The size H1 of at least one storage-cell-assembly-case upper-sub-member 96 of the two or more storage-cell-assembly-case upper-sub-members 96 and 98 in the up-down direction bud is larger than the size H2 of the storage-cell-assembly-case lower member 92 in the up-down direction bud, the storage-cell-assembly-case lower member 92 including the bottom section 92a that has a plate shape and includes the first main surface S1 that receives a load from the storage cell assembly 90 in the downward direction bd, and the second main surface S2, which is the bottom surface of the leaning vehicle battery 9, supported by the vehicle body 2 of the leaning vehicle 1 from below in the up-down direction bud.

   As described above, since the storage cell assembly case 91 has the structure (A), the rigidity of the storage-cell-assembly-case lower member 92 can easily be increased without increasing the rigidity of the storage-cell-assembly-case upper member 94. Further, since the storage cell assembly case has the structure (B), the size of the storage-cell-assembly-case lower member 92 is reduced. Accordingly, an increase in the weight of the storage cell assembly case 91 is suppressed even with increased rigidity of the storage-cell-assembly-case lower member 92 because of a small increased amount of weight of only the storage-cell-assembly-case lower member 92. As a result, even after weight reduction is achieved in the leaning vehicle battery 9, the load bearing capability of the storage cell assembly case 91 can be maintained.
(c) According to the leaning vehicle battery 9, the storage cell assembly 90 has a structure in which the plurality of storage cells 90a stacked together in a stacked direction, the storage cell having a flat shape. Such a stacked structure is suitable for increasing the amount of charge per unit volume in the storage cell assembly 90.
(d) According to the leaning vehicle battery 9, cell stack shifting is less likely to occur in the storage cell assembly 90. The cell stack shifting in the storage cell assembly refers to a shifting event of storage cells 90a in the front-back direction bfb or the left-right direction blr. In the leaning vehicle battery 9, the stacked direction of the plurality of storage cells 90a coincides with the up-down direction bud. Accordingly, when the leaning vehicle 1 makes a large movement in the up-down direction UD, a force causing the cell stack shifting in the storage cell assembly 90 is less likely to propagate to the storage cell assembly 90. Suppression of the cell stack shifting in the storage cell assembly 90 contributes to an improvement of the load bearing capability of the storage cell assembly case 91.
(e) According to the leaning vehicle battery 9, the force received by the storage cell 90a is dispersed to the storage-cell-assembly-case upper member 94 and the storage-cell-assembly-case lower member 92. Specifically, the size H100 (see FIG. 1) of the storage cell 90a in the up-down direction bud, which is disposed on a lowermost position in the downward direction bu in the plurality of storage cells 90a is larger than the size H2 of the storage-cell-assembly-case lower member 92 in the up-down direction bud. In this way, the storage cell 90a disposed on the lowermost position in the downward direction bd is raised from the storage-cell-assembly-case lower member 92 in the upward direction bu. In other words, at least part of the storage cell 90a disposed on the lowermost position in the downward direction bd overlaps with the storage-cell-assembly-case upper member 94 as viewed in the leaning-vehicle-battery 9 backward direction bb or rightward direction (br. Accordingly, when the storage cell 90a disposed on the lowermost position in the downward direction bd receives a force in the front-back direction bfb or the left-right direction blr, the force received by the storage cell 90a disposed on the lowermost position in the downward direction bd is dispersed to the storage-cell-assembly-case upper member 94 and the storage-cell-assembly-case lower member 92.
(f) According to the leaning vehicle battery 9, the load bearing capability of the storage cell assembly case 91 is improved. Specifically, the storage-cell-assembly-case lower member 92 has a structure with which high rigidity can easily be obtained. Accordingly, the storage-cell-assembly-case lower member 92 is less likely to be deformed. Accordingly, the storage cell assembly 90 is fixed to the storage-cell-assembly-case lower member 92. In this way, the storage cell assembly 90 is less likely to be deformed when the load of the storage cell assembly 90 is applied to the storage-cell-assembly-case lower member 92. As a result, according to the leaning vehicle battery 9, the load bearing capability of the storage cell assembly case 91 is improved.
(g) According to the leaning vehicle battery 9, a torsion in the leaning vehicle battery 9 can easily be suppressed with the width of the leaning vehicle 1 in the leaning-vehicle left-right direction LR being made small. Specifically, the size of the storage cell assembly case 91 in the left-right direction blr is smaller than the size of the storage cell assembly case 91 in the front-back direction bfb and the size of the storage cell assembly case 91 in the up-down direction bud. As a result, the size of the leaning vehicle 1 is reduced in the left-right direction LR. The storage cell assembly case 91 has a structure that is slim in the left-right direction blr. Consequently, when vibration in the left-right direction LR is applied to the leaning vehicle battery 9, the leaning vehicle battery 9 is prone to deformation in general such that the left and right faces of the leaning vehicle battery 9 are distorted. However, the leaning vehicle battery 9 is generally supported by the vehicle body 2 of the leaning vehicle 1 in the leftward direction L and rightward direction R. As a result, according to the leaning vehicle battery 9, a torsion in the leaning vehicle battery 9 can easily be suppressed.
(h) According to the leaning vehicle battery 9, the material for the storage-cell-assembly-case upper member 94 is different from the material for the storage-cell-assembly-case lower member 92. Accordingly, the degree of freedom in selecting the material for the storage-cell-assembly-case upper member 94 and the degree of freedom in selecting the material for the storage-cell-assembly-case lower member 92 are enhanced.
(i) According to the leaning vehicle battery 9, the specific gravity of the material for the storage-cell-assembly-case upper member 94 is smaller than the specific gravity of the material for the storage-cell-assembly-case lower member 92. Accordingly, the center of gravity of the leaning vehicle battery 9 in the up-down direction bud is lowered.

### (First Variation)

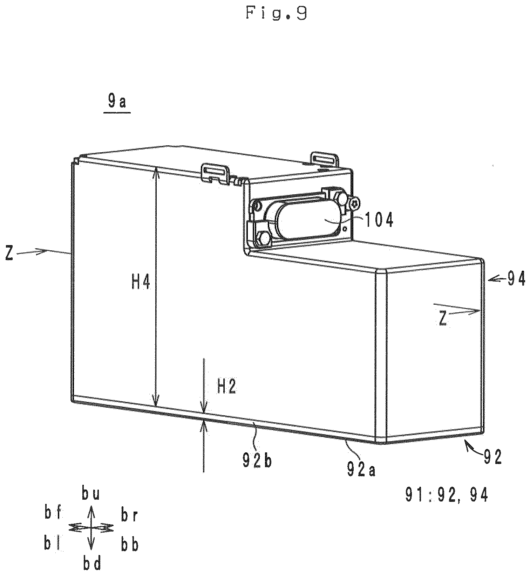

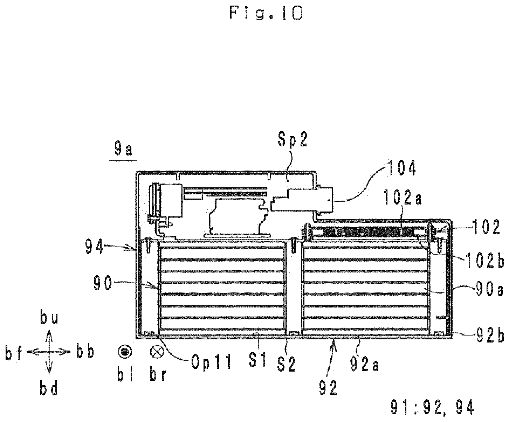

A leaning vehicle battery 9a according to a first variation will now be described with reference to drawings. FIG. 9 is an exterior perspective view of the leaning vehicle battery 9a. FIG. 10 is a sectional view of the leaning vehicle battery 9a taken along a line Z-Z.

The leaning vehicle battery 9a is different from the leaning vehicle battery 9 in terms of the structure of the storage-cell-assembly-case upper member 94. Specifically, in the leaning vehicle battery 9, the storage-cell-assembly-case upper member 94 has a structure separable into the storage-cell-assembly-case upper-sub-member 96 and the storage-cell-assembly-case upper-sub-member 98, as illustrated in FIG. 1. On the other hand, in the leaning vehicle battery 9a, the storage-cell-assembly-case upper member 94 has a structure that is inseparable into two or more sub-members, as illustrated in FIGS. 9 and 10. Further, the size H4 of the storage-cell-assembly-case upper member 94 in the up-down direction bud is larger than the size H2 of the storage-cell-assembly-case lower member 92 in the up-down direction bud, the storage-cell-assembly-case lower member 92 including the plate-shaped bottom section 92a that has the first surface S1, which receives a load from the storage cell assembly 90 in the downward direction bd, and the second main surface S2, which is the bottom surface of the leaning vehicle battery 9. The size H4 is equal to an average value of distances in the up-down direction bud from portions of outer edges of the opening Op11 to an upper end of the storage-cell-assembly-case upper member 94. In the embodiment, the opening Op11 is located on a plane perpendicular to the up-down direction bud. Therefore, the size H1 is equal to the distance in the up-down direction bud from the opening Op11 of the storage-cell-assembly-case upper member 94 to the upper end of the storage-cell-assembly-case upper member 94 with the leaning vehicle battery 9 being mounted on the upright vehicle body 2. Other configurations of the leaning vehicle battery 9a are the same as those of the leaning vehicle battery 9, and therefore, the description thereof will be omitted.
(a) The leaning vehicle battery 9a can output a large voltage, for the same reason as the leaning vehicle battery 9.
(b) In the leaning vehicle battery 9a, even after weight reduction is achieved in the leaning vehicle battery 9a, the load bearing capability of the storage cell assembly case 91 can be maintained. Specifically, the leaning vehicle 1 makes a large movement in the up-down direction UD. Consequently, the bottom section 92a of the storage cell assembly case 91 in the leaning vehicle 1 is likely to receive a load from the storage cell assembly 90. Therefore, the rigidity of the bottom section 92a of the storage cell assembly case 91 may desirably be increased.
   Accordingly, in the leaning vehicle battery 9a, the storage cell assembly case 91 has the structures (C) and (D).
   (C) The storage cell assembly case 91 includes: a storage-cell-assembly-case lower member 92 including a bottom section 92a having a plate shape, the storage-cell-assembly-case lower member 92 having a structure that is inseparable into two or more sub-members, the bottom section 92a including: a first main surface S1 that receives a load from the storage cell assembly 90 in the downward direction bd; and a second main surface S2, which is the bottom surface of the leaning vehicle battery 9a, supported by the vehicle body 2 of the leaning vehicle 1 from below in the up-down direction bud; and a storage-cell-assembly-case upper member 94 disposed above the storage-cell-assembly-case lower member 92 in the upward direction bu and fixed to the storage-cell-assembly-case lower member 92, the storage-cell-assembly-case upper member 94 having a structure that is inseparable into two or more sub-members.
   (D) The size H4 of the storage-cell-assembly-case upper member 94 in the up-down direction bud is larger than the size H2 of the storage-cell-assembly-case lower member 92 in the up-down direction bud, the storage-cell-assembly-case lower member 92 including a bottom section 92a that has a plate shape and includes the first main surface S1 that receives a load from the storage cell assembly 90 in the downward direction bd, and the second main surface S2, which is the bottom surface of the leaning vehicle battery 9a, supported by the vehicle body 2 of the leaning vehicle 1 from below in the up-don direction bud.

   As described above, since the storage cell assembly case 91 has the structure (C), the rigidity of the storage-cell-assembly-case lower member 92 can easily be increased without increasing the rigidity of the storage-cell-assembly-case upper member 94. Further, since the storage cell assembly case has the structure (D), the size of the storage-cell-assembly-case lower member 92 is reduced. Accordingly, an increase in the weight of the storage cell assembly case 91 is suppressed even with increased rigidity of the storage-cell-assembly-case lower member 92 because of a small increased amount of weight of the storage-cell-assembly-case lower member 92. As a result, even after weight reduction is achieved in the leaning vehicle battery 9, the load bearing capability of the storage cell assembly case 91 can be maintained.
(c) According to the leaning vehicle battery 9a, the amount of charge per unit volume in the storage cell assembly 90 can be increased, for the same reason as the leaning vehicle battery 9.
(d) According to the leaning vehicle battery 9a, cell stack shifting is less likely to occur in the storage cell assembly 90, for the same reason as the leaning vehicle battery 9.
(e) According to the leaning vehicle battery 9a, the force received by the storage cell 90a is dispersed to the storage-cell-assembly-case upper member 94 and the storage-cell-assembly-case lower member 92, for the same reason as the leaning vehicle battery 9.
(f) According to the leaning vehicle battery 9a, the load bearing capability of the storage cell assembly case 91 is improved, for the same reason as the leaning vehicle battery 9.
(g) According to the leaning vehicle battery 9a, a torsion in the leaning vehicle battery 9a can easily be suppressed with the width of the leaning vehicle 1 in the left-right direction LR being made small, for the same reason as the leaning vehicle battery 9.
(h) According to the leaning vehicle battery 9a, the degree of freedom in selecting the material for the storage-cell-assembly-case upper member 94 and the degree of freedom in selecting the material for the storage-cell-assembly-case lower member 92 are enhanced, for the same reason as the leaning vehicle battery 9.
(i) According to the leaning vehicle battery 9a, the center of gravity of the leaning vehicle battery 9a in the up-down direction bud is lowered, for the same reason as the leaning vehicle battery 9.

### (Second Variation)

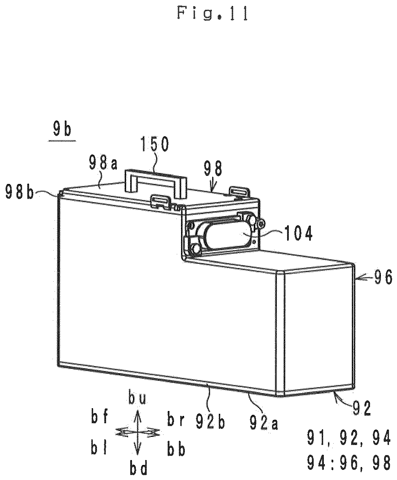

A leaning vehicle battery 9b according to a second variation will now be described with reference to drawings. FIG. 11 is an exterior perspective view of the leaning vehicle battery 9b.

The leaning vehicle battery 9b is different from the leaning vehicle battery 9 in that it further includes a leaning-vehicle-battery handle 150. The leaning-vehicle-battery handle 150 is attached to the storage cell assembly case 91. In the embodiment, the leaning-vehicle-battery handle 150 is attached to an upper face of the storage cell assembly case 91. The leaning-vehicle-battery handle 150 is held by a user when the user pulls up the leaning vehicle battery 9b in the upward direction bu. Other configurations of the leaning vehicle battery 9b are the same as those of the leaning vehicle battery 9, and therefore, the description thereof will be omitted.
(a) The leaning vehicle battery 9b can output a large voltage, for the same reason as the leaning vehicle battery 9.
(b) In the leaning vehicle battery 9b, even after weight reduction is achieved in the leaning vehicle battery 9b, the load bearing capability of the storage cell assembly case 91 can be maintained, for the same reason as the leaning vehicle battery 9.
(c) According to the leaning vehicle battery 9b, the amount of charge per unit volume in the storage cell assembly 90 can be increased, for the same reason as the leaning vehicle battery 9.
(d) According to the leaning vehicle battery 9b, cell stack shifting is less likely to occur in the storage cell assembly 90, for the same reason as the leaning vehicle battery 9.
(e) According to the leaning vehicle battery 9b, the force received by the storage cell 90a is dispersed to the storage-cell-assembly-case upper member 94 and the storage-cell-assembly-case lower member 92, for the same reason as the leaning vehicle battery 9.
(f) According to the leaning vehicle battery 9b, the load bearing capability of the storage cell assembly case 91 is improved, for the same reason as the leaning vehicle battery 9.
(g) According to the leaning vehicle battery 9b, a torsion in the leaning vehicle battery 9b can easily be suppressed with the width of the leaning vehicle 1 in the left-right direction LR being made small, for the same reason as the leaning vehicle battery 9.
(h) According to the leaning vehicle battery 9b, the degree of freedom in selecting the material for the storage-cell-assembly-case upper member 94 and the degree of freedom in selecting the material for the storage-cell-assembly-case lower member 92 are enhanced, for the same reason as the leaning vehicle battery 9.
(i) According to the leaning vehicle battery 9b, the center of gravity of the leaning vehicle battery 9b in the up-down direction bud is lowered, for the same reason as the leaning vehicle battery 9.
(j) According to the leaning vehicle battery 9b, the user can use the leaning-vehicle-battery handle 150 to easily attach and remove the leaning vehicle battery 9b to and from the vehicle body 2.

### (Third Variation)

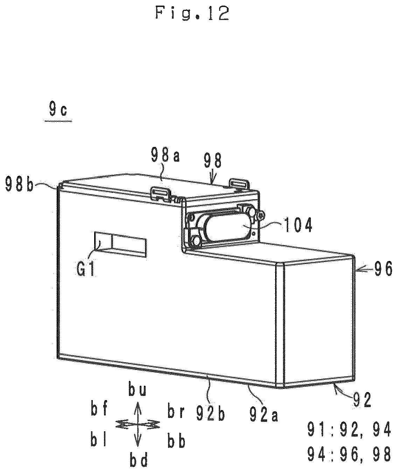

A leaning vehicle battery 9c according to a third variation will now be described with reference to drawings. FIG. 12 is an exterior perspective view of the leaning vehicle battery 9c.

The leaning vehicle battery 9c is different from the leaning vehicle battery 9 in that recesses G1 and G2 (the recess G2 is not illustrated) is provided on the storage-cell-assembly-case upper member 94. Specifically, the recess G1 is formed from part of a left face of the storage cell assembly case 91 recessed in the right direction br. The recess G2 is formed from part of a right face of the storage cell assembly case 91 recessed in the left direction bl. The recesses G1 and G2 are held by a user when the user pulls up the leaning vehicle battery 9c in the upward direction bu. Other configurations of the leaning vehicle battery 9c are the same as those of the leaning vehicle battery 9, and therefore, the description thereof will be omitted.
(a) The leaning vehicle battery 9c can output a large voltage, for the same reason as the leaning vehicle battery 9.
(b) In the leaning vehicle battery 9c, even after weight reduction is achieved in the leaning vehicle battery 9c, the load bearing capability of the storage cell assembly case 91 can be maintained, for the same reason as the leaning vehicle battery 9.
(c) According to the leaning vehicle battery 9c, the amount of charge per unit volume in the storage cell assembly 90 can be increased, for the same reason as the leaning vehicle battery 9.
(d) According to the leaning vehicle battery 9c, cell stack shifting is less likely to occur in the storage cell assembly 90, for the same reason as the leaning vehicle battery 9.
(e) According to the leaning vehicle battery 9c, the force received by the storage cell 90a is dispersed to the storage-cell-assembly-case upper member 94 and the storage-cell-assembly-case lower member 92, for the same reason as the leaning vehicle battery 9.
(f) According to the leaning vehicle battery 9c, the load bearing capability of the storage cell assembly case 91 is improved, for the same reason as the leaning vehicle battery 9.
(g) According to the leaning vehicle battery 9c, a torsion in the leaning vehicle battery 9c can easily be suppressed with the width of the leaning vehicle 1 in the left-right direction LR being made small, for the same reason as the leaning vehicle battery 9.
(h) According to the leaning vehicle battery 9c, the degree of freedom in selecting the material for the storage-cell-assembly-case upper member 94 and the degree of freedom in selecting the material for the storage-cell-assembly-case lower member 92 are enhanced, for the same reason as the leaning vehicle battery 9.
(i) According to the leaning vehicle battery 9c, the center of gravity of the leaning vehicle battery 9c in the up-down direction bud is lowered, for the same reason as the leaning vehicle battery 9.
(j) According to the leaning vehicle battery 9c, the user can use the recesses G1 and G2 to easily attach and remove the leaning vehicle battery 9c to and from the vehicle body 2.

It is to be noted that the recesses G1 and G2 may be provided on a front face or a rear face of the storage cell assembly case 91.

### (Fourth Variation)

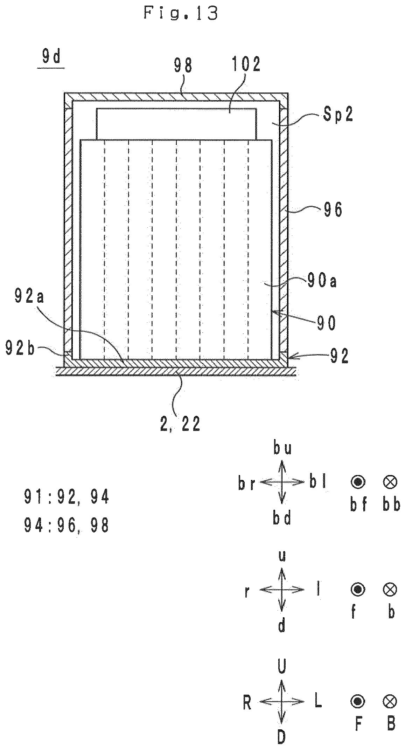

A leaning vehicle battery 9d according to a fourth variation will now be described with reference to drawings. FIG. 13 is a sectional structural view of the leaning vehicle 1 provided with a leaning vehicle battery 9d taken along the line Y-Y (see FIG. 2). In FIG. 13, the resin cover 100 is omitted. Further, since FIG. 13 is a schematic, dimensions in FIG. 13 do not necessarily match dimensions in other drawings.

The leaning vehicle battery 9d is different from the leaning vehicle battery 9 in terms of the stacked direction of the plurality of storage cells 90a. Specifically, in the leaning vehicle battery 9, the stacked direction of the plurality of storage cells 90a coincides with the up-down direction bud. On the other hand, in the leaning vehicle battery 9d, the stacked direction of the plurality of storage cells 90a coincides with the left-right direction blr. Other configurations of the leaning vehicle battery 9d are the same as those of the leaning vehicle battery 9, and therefore, the description thereof will be omitted.
(a) The leaning vehicle battery 9d can output a large voltage, for the same reason as the leaning vehicle battery 9.
(b) In the leaning vehicle battery 9d, even after weight reduction is achieved in the leaning vehicle battery 9d, the load bearing capability of the storage cell assembly case 91 can be maintained, for the same reason as the leaning vehicle battery 9.
(c) According to the leaning vehicle battery 9d, the amount of charge per unit volume in the storage cell assembly 90 can be increased, for the same reason as the leaning vehicle battery 9.
(f) According to the leaning vehicle battery 9d, the load bearing capability of the storage cell assembly case 91 is improved, for the same reason as the leaning vehicle battery 9.
(g) According to the leaning vehicle battery 9d, a torsion in the leaning vehicle battery 9d can easily be suppressed with the width of the leaning vehicle 1 in the left-right direction LR being made small, for the same reason as the leaning vehicle battery 9.
(h) According to the leaning vehicle battery 9d, the degree of freedom in selecting the material for the storage-cell-assembly-case upper member 94 and the degree of freedom in selecting the material for the storage-cell-assembly-case lower member 92 are enhanced, for the same reason as the leaning vehicle battery 9.
(i) According to the leaning vehicle battery 9d, the center of gravity of the leaning vehicle battery 9d in the up-down direction bud is lowered, for the same reason as the leaning vehicle battery 9.

### (Fifth Variation)

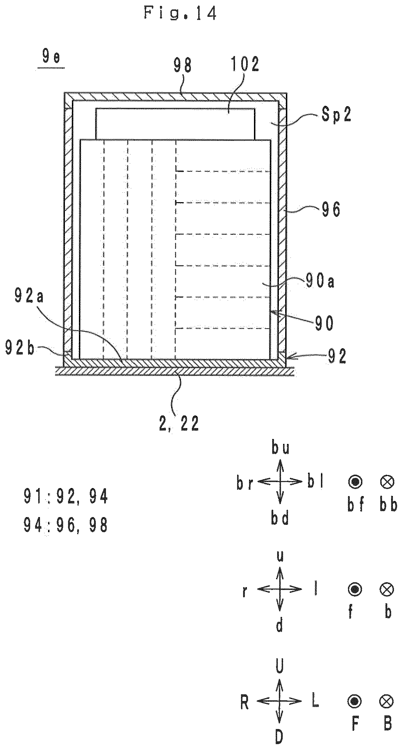

A leaning vehicle battery 9e according to a fifth variation will now be described with reference to drawings. FIG. 14 is a sectional structural view of the leaning vehicle 1 provided with a leaning vehicle battery 9e taken along the line Y-Y (see FIG. 2). In FIG. 14, the resin cover 100 is omitted. Further, since FIG. 14 is a schematic, dimensions in FIG. 14 do not necessarily match dimensions in other drawings.

The leaning vehicle battery 9e is different from the leaning vehicle battery 9 in terms of the stacked direction of the plurality of storage cells 90a. Specifically, in the leaning vehicle battery 9, the stacked direction of the plurality of storage cells 90a coincides with the up-down direction bud. On the other hand, in the leaning vehicle battery 9e, the stacked directions of the plurality of storage cells 90a coincide with the left-right direction blr and the up-down direction bud. Specifically, in the left half of the storage cell assembly 90, the stacked direction of the plurality of storage cells 90a coincides with the up-down direction bud. In the right half of the storage cell assembly 90, the stacked direction of the plurality of storage cells 90a coincides with the left-right direction blr. Other configurations of the leaning vehicle battery 9e are the same as those of the leaning vehicle battery 9, and therefore, the description thereof will be omitted.
(a) The leaning vehicle battery 9e can output a large voltage, for the same reason as the leaning vehicle battery 9.
(b) In the leaning vehicle battery 9e, even after weight reduction is achieved in the leaning vehicle battery 9e, the load bearing capability of the storage cell assembly case 91 can be maintained, for the same reason as the leaning vehicle battery 9.
(c) According to the leaning vehicle battery 9e, the amount of charge per unit volume in the storage cell assembly 90 can be increased, for the same reason as the leaning vehicle battery 9.
(f) According to the leaning vehicle battery 9e, the load bearing capability of the storage cell assembly case 91 is improved, for the same reason as the leaning vehicle battery 9.
(g) According to the leaning vehicle battery 9e, a torsion in the leaning vehicle battery 9e can easily be suppressed with the width of the leaning vehicle 1 in the left-right direction LR being made small, for the same reason as the leaning vehicle battery 9.
(h) According to the leaning vehicle battery 9e, the degree of freedom in selecting the material for the storage-cell-assembly-case upper member 94 and the degree of freedom in selecting the material for the storage-cell-assembly-case lower member 92 are enhanced, for the same reason as the leaning vehicle battery 9.
(i) According to the leaning vehicle battery 9e, the center of gravity of the leaning vehicle battery 9e in the up-down direction bud is lowered, for the same reason as the leaning vehicle battery 9.

### (Sixth Variation)

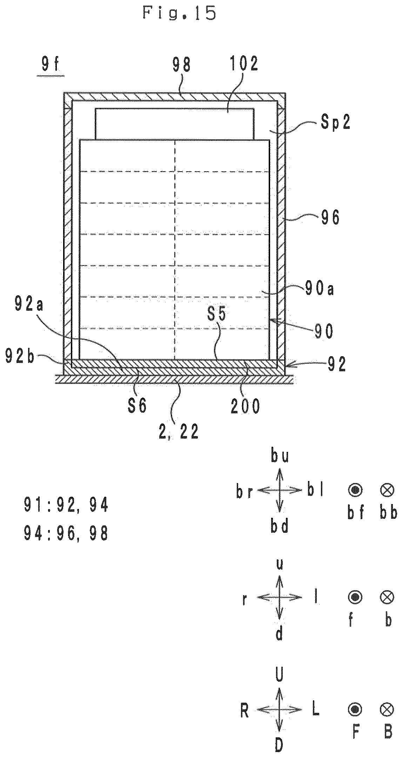

A leaning vehicle battery 9f according to a sixth variation will now be described with reference to drawings. FIG. 15 is a sectional structural view of the leaning vehicle 1 provided with a leaning vehicle battery 9f taken along the line Y-Y (see FIG. 2). In FIG. 15, the resin cover 100 is omitted. Further, since FIG. 15 is a schematic, dimensions in FIG. 15 do not necessarily match dimensions in other drawings.

The leaning vehicle battery 9f is different from the leaning vehicle battery 9 in that it further includes a plate-like member 200. The plate-like member 200 is a flat member that has rectangular fifth and sixth main surfaces S5 and S6. The fifth main surface S5 is an upper face of the plate-like member 200. The fifth main surface S5 is in contact with the storage cell assembly 90. Specifically, the fifth main surface S5 is in contact with a bottom surface of the storage cell assembly 90. The sixth main surface S6 is a bottom surface of the plate-like member 200. The sixth main surface S6 is in contact with the bottom section 92a. In this way, the plate-like member 200 is disposed below the storage cell assembly 90 in the downward direction bd and above the bottom section 92a in the upward direction bu. In the leaning vehicle battery 9f, the first main surface (not illustrated in FIG. 15) of the bottom section 92a also receives a load downward in the downward direction bd from the storage cell assembly 90 via the plate-like member 200. Other configurations of the leaning vehicle battery 9f are the same as those of the leaning vehicle battery 9, and therefore, the description thereof will be omitted.
(a) The leaning vehicle battery 9f can output a large voltage, for the same reason as the leaning vehicle battery 9.
(b) In the leaning vehicle battery 9f, even after weight reduction is achieved in the leaning vehicle battery 9f, the load bearing capability of the storage cell assembly case 91 can be maintained, for the same reason as the leaning vehicle battery 9.
(c) According to the leaning vehicle battery 9f, the amount of charge per unit volume in the storage cell assembly 90 can be increased, for the same reason as the leaning vehicle battery 9.
(d) According to the leaning vehicle battery 9f, cell stack shifting is less likely to occur in the storage cell assembly 90, for the same reason as the leaning vehicle battery 9.
(e) According to the leaning vehicle battery 9f, the force received by the storage cell 90a is dispersed to the storage-cell-assembly-case upper member 94 and the storage-cell-assembly-case lower member 92, for the same reason as the leaning vehicle battery 9.
(f) According to the leaning vehicle battery 9f, the load bearing capability of the storage cell assembly case 91 is improved, for the same reason as the leaning vehicle battery 9.
(g) According to the leaning vehicle battery 9f, a torsion in the leaning vehicle battery 9f can easily be suppressed with the width of the leaning vehicle 1 in the left-right direction LR being made small, for the same reason as the leaning vehicle battery 9.
(h) According to the leaning vehicle battery 9f, the degree of freedom in selecting the material for the storage-cell-assembly-case upper member 94 and the degree of freedom in selecting the material for the storage-cell-assembly-case lower member 92 are enhanced, for the same reason as the leaning vehicle battery 9.
(i) According to the leaning vehicle battery 9f, the center of gravity of the leaning vehicle battery 9f in the up-down direction bud is lowered, for the same reason as the leaning vehicle battery 9.
(k) According to the leaning vehicle battery 9f, the bottom section 92a of the storage-cell-assembly-case lower member 92 is reinforced by the plate-like member 200.

### (Seventh Variation)

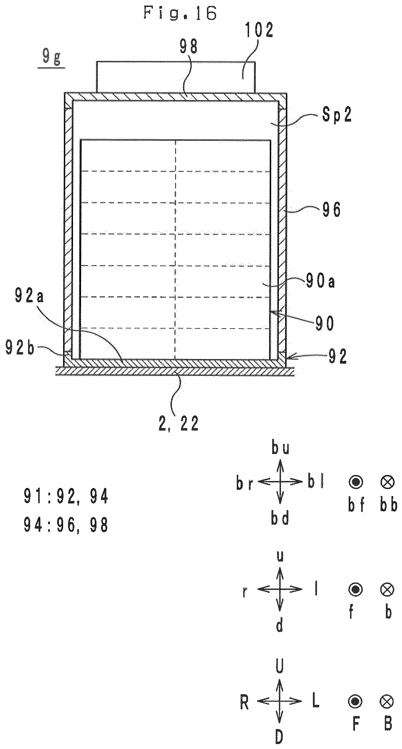

A leaning vehicle battery 9g according to a seventh variation will now be described with reference to drawings. FIG. 16 is a sectional structural view of the leaning vehicle 1 provided with a leaning vehicle battery 9g taken along the line Y-Y (see FIG. 2). In FIG. 16, the resin cover 100 is omitted. Further, since FIG. 16 is a schematic, dimensions in FIG. 16 do not necessarily match dimensions in other drawings.

The leaning vehicle battery 9g is different from the leaning vehicle battery 9 in terms of the position of the circuit section 102. Specifically, in the leaning vehicle battery 9, the circuit section 102 is disposed in the storage cell assembly case 91. On the other hand, in the leaning vehicle battery 9g, the circuit section 102 is disposed outside the storage cell assembly case 91. The circuit board 102a is disposed on the upper face of the storage cell assembly case 91. Other configurations of the leaning vehicle battery 9g are the same as those of the leaning vehicle battery 9, and therefore, the description thereof will be omitted.
(a) The leaning vehicle battery 9g can output a large voltage, for the same reason as the leaning vehicle battery 9.
(b) In the leaning vehicle battery 9g, even after weight reduction is achieved in the leaning vehicle battery 9g, the load bearing capability of the storage cell assembly case 91 can be maintained, for the same reason as the leaning vehicle battery 9.
(c) According to the leaning vehicle battery 9g, the amount of charge per unit volume in the storage cell assembly 90 can be increased, for the same reason as the leaning vehicle battery 9.
(d) According to the leaning vehicle battery 9g, cell stack shifting is less likely to occur in the storage cell assembly 90, for the same reason as the leaning vehicle battery 9.
(e) According to the leaning vehicle battery 9g, the force received by the storage cell 90a is dispersed to the storage-cell-assembly-case upper member 94 and the storage-cell-assembly-case lower member 92, for the same reason as the leaning vehicle battery 9.
(f) According to the leaning vehicle battery 9g, the load bearing capability of the storage cell assembly case 91 is improved, for the same reason as the leaning vehicle battery 9.
(g) According to the leaning vehicle battery 9g, a torsion in the leaning vehicle battery 9g can easily be suppressed with the width of the leaning vehicle 1 in the left-right direction LR being made small, for the same reason as the leaning vehicle battery 9.
(h) According to the leaning vehicle battery 9g, the degree of freedom in selecting the material for the storage-cell-assembly-case upper member 94 and the degree of freedom in selecting the material for the storage-cell-assembly-case lower member 92 are enhanced, for the same reason as the leaning vehicle battery 9.
(i) According to the leaning vehicle battery 9g, the center of gravity of the leaning vehicle battery 9g in the up-down direction bud is lowered, for the same reason as the leaning vehicle battery 9.

### (Other Embodiments)

The embodiments and variations for which at least one of description and illustration in the drawings is made in the specification are intended to facilitate the understanding of the present disclosure, and are not intended for limitation to the idea of the present disclosure. Any changes and alterations may be made to the embodiments and variations without departing from the gist thereof.

The gist encompasses any equivalent elements, modifications, deletions, combinations (for example, combinations of features across the embodiments and variations), alterations and changes that can be appreciated by those skilled in the art based on the exemplary embodiments disclosed herein. Limitations in claims should be interpreted broadly based on terms used in the claims, and should not be limited to the embodiments and variations described in this specification and during the prosecution of this application. Such embodiments and variations should be interpreted as non-exclusive. For example, in the specification, the terms "preferably" and "may be" are non-exclusive and means "preferably, but not limited to" and "may be, but not limited to", respectively.

It is to be noted that the storage cell assembly case 91 may be made of a material other than metal. For example, other materials than metal include a resin or a fiber reinforced resin made of a resin reinforced with fibers.

It is to be noted that the material for the storage-cell-assembly-case upper member 94 and the material for the storage-cell-assembly-case lower member 92 may be the same.

It is to be noted that the specific gravity of the material for the storage-cell-assembly-case upper member 94 may be equal to the specific gravity of the material for the storage-cell-assembly-case lower member 92 or may be larger than the specific gravity of the material for the storage-cell-assembly-case lower member 92.

It is to be noted that the storage cell assembly case 91 may have a shape other than a rectangular parallelepiped box shape. Accordingly, the storage cell assembly case 91 may have a cylindrical box shape, for example.

It is to be noted that, in the storage cell assembly case 91, a relation of L > H > W may not be established. A relation of L > W > H may be established. A relation of H > L > W may be established. A relation of H > W > L may be established. A relation of W > H > L may be established. A relation of W > L > H may be established.

It is to be noted that the storage-cell-assembly-case lower member 92 may have a shape other than a tray shape. For example, other shapes than a tray shape include a plate shape and a box shape provided with an opening on its upper face.

It is to be noted that, in the leaning vehicle batteries 9 and 9b to 9g, a relation of H1 > H3 may not be established. A relation of H3 > H1 may be established.

It is to be noted that the stacked direction of the storage cells 90a may coincide with the front-back direction bfb.

It is to be noted that, in the leaning vehicle batteries 9 and 9a to 9g, the storage cell assembly 90 may be fixed to a portion other than the storage-cell-assembly-case lower member 92 in the storage cell assembly case 91.

It is to be noted that, in the storage cell assembly case 91, the opening Op11 and the opening Op12 may not be located on a plane perpendicular to the up-down direction bud. Further, the opening Op11 and the opening Op12 may have a shape fit within a single plane.

It is to be noted that, as illustrated in FIG. 1, the shape of each of the leaning vehicle batteries 9 and 9a to 9g may not have an L-shape as viewed in the rightward direction r. Accordingly, the upper face of the leaning vehicle battery 9 may not have a step provided thereon.

It is to be noted that the leaning vehicle batteries 9 and 9a to 9g are attached to the battery container 22 by moving the leaning vehicle batteries 9 and 9a to 9g in the lower-front direction fd. However, for example, the leaning vehicle batteries 9 and 9a to 9g may be attached to the battery container 22 by moving the leaning vehicle batteries 9 and 9a to 9g in the lower-back direction bd. Further, the leaning vehicle batteries 9 and 9a to 9g are removed from the battery container 22 by moving the leaning vehicle batteries 9 and 9a to 9g in the upper-back direction bu. However, for example, the leaning vehicle batteries 9 and 9a to 9g may be removed from the battery container 22 by moving the leaning vehicle batteries 9 and 9a to 9g in the upper-front direction fu.

It is to be noted that, in the leaning vehicle 1, the power unit 8 is disposed below the leaning vehicle batteries 9 and 9a to 9g in the downward direction d. However, the power unit 8 may be disposed in a location other than below the leaning vehicle batteries 9 and 9a to 9g in the downward direction d.

It is to be noted that, in the leaning vehicle 1, the battery insertion opening Op1 is provided on the upper face of the battery container 22. However, the battery insertion opening Op1 may be provided on the lower, left, right, front, or rear face of the battery container 22.

It is to be noted that, in the leaning vehicle 1, the vehicle body 2 is formed of a fiber reinforced resin, which is a resin reinforced with fibers. However, the vehicle body 2 may not be formed of a fiber reinforced resin, which is a resin reinforced with fibers. The vehicle body 2 may be formed of a material (for example, metal such as iron and aluminum) other than a fiber reinforced resin, which is a resin reinforced with fibers.

It is to be noted that, in the leaning vehicle 1, the vehicle body 2 is formed of a carbon fiber reinforced resin, which is a resin reinforced with a fiber sheet containing fibers. However, the vehicle body 2 is made of a fiber reinforced resin in which unwoven fibers are employed, instead of a fiber sheet. Further, the fiber may be continuous fibers of a predetermined length (for example, 1 mm or longer) or may be discontinuous fibers.

It is to be noted that, in the leaning vehicle 1, the power unit 8 is retained by the battery container 22. However, the power unit 8 may be supported by a component other than the battery container 22. For example, the power unit 8 may be supported by the swing arms 61.

It is to be noted that, in the leaning vehicle 1, the vehicle body 2 is a box-shaped monocoque frame. However, the vehicle body 2 is not limited to a box-shaped monocoque frame. For example, the vehicle body 2 may be a double cradle frame, a diamond frame, a truss frame, or a twin-spar frame.

It is to be noted that the leaning vehicle 1 is described as a vehicle for trials. However, the leaning vehicle 1 may be a vehicle other than that for trials. The leaning vehicle 1 may be a vehicle of a super sport type, of a tourer type, of a naked type, of a cruiser type, of a scooter type, or of a motocross type. A vehicle for trials and a vehicle of a motocross type are off-road vehicles. Vehicles of super sport, tourer, naked, cruiser, and scooter types are on-road vehicles.

It is to be noted that the leaning vehicle 1 is provided with one front wheel 3. However, the leaning vehicle 1 may be provided with two or more front wheels. In this case, the leaning vehicle 1 is provided with two or more front axles. Further, the leaning vehicle 1 is provided with one rear wheel 4. However, the leaning vehicle 1 may be provided with two or more rear wheels. In this case, the leaning vehicle 1 is provided with two or more rear axles.

It is to be noted that the leaning vehicle batteries 9 and 9a to 9g may be batteries other than a lithium ion battery. Accordingly, the leaning vehicle batteries 9 and 9a to 9g may for example be a lead battery, a nickel metal hydride battery, a solid state battery, or the like.

It is to be noted that, in the leaning vehicle 1, the power unit 8 may include an engine, instead of the electric motor 80. In this case, the leaning vehicle batteries 9 and 9a to 9g supplies electric power to a spark plug of the engine. Further, the leaning vehicle batteries 9 and 9a to 9g may not supply electric power for driving the power unit 8.

It is to be noted that, in the leaning vehicle 1, the power unit 8 may be a combination of an engine and the electric motor 80. In this case, the engine and the electric motor 80 generate a driving force for rotating the rear wheel 4. Further, the electric motor 80 may use the electric power generated by the engine to generate the driving force for rotating the rear wheel 4. In this case, the leaning vehicle battery 9 is charged by the electric power generated in the engine.

It is to be noted that, in the leaning vehicle batteries 9 and 9a to 9g, the resin cover 100 is not an indispensable component.

It is to be noted that, in the leaning vehicle batteries 9 and 9b to 9g, the storage-cell-assembly-case upper member 94 may have a structure separable into three or more sub members.

It is to be noted that, in the leaning vehicle batteries 9 and 9b to 9g, the size of at least one storage-cell-assembly-case upper-sub-member of the two or more storage-cell-assembly-case upper-sub-members in the up-down direction bud may be larger than the size of the storage-cell-assembly-case lower member 92 in the up-down direction bud. Accordingly, the sizes of both the storage-cell-assembly-case upper-sub-members 96 and 98 in the up-down direction bud may be larger than the size of the storage-cell-assembly-case lower member 92 in the up-down direction bud. Further, the size of the storage-cell-assembly-case upper-sub-member 98 in the up-down direction bud may be larger than the size of the storage-cell-assembly-case lower member 92 in the up-down direction bud.

It is to be noted that, in the leaning vehicle batteries 9 and 9a to 9g, the structure of the storage cell 90a is not limited to the illustrated structure. The storage cell 90a may include a plurality of structures that each have multiple sheets of positive electrode, multiple sheets of negative electrode, multiple sheets of separator, and electrolyte that are sealed by laminate films. In this case, the storage cell 90a includes a case for containing the plurality of structures. The case has a flat shape.

It is to be noted that, in the leaning vehicle batteries 9 and 9a to 9g, the structure of the storage cell 90a is not limited to the illustrated structure. The storage cell 90a may be a cell of a dry-battery type. A cell of a dry-battery type refers to a cylindrical cell. In this case, for example, a plurality of storage cells 90a are arranged in a matrix in the front-back direction bfb and the left-right direction blr as viewed in the downward direction bd. In this case, the plurality of storage cells 90a are each arranged with its central axis extending in the up-down direction bud.

It is to be noted that, in the leaning vehicle battery 9g, part of the circuit section 102 may be disposed outside the storage cell assembly case 91 and the remaining part of the circuit section 102 may be disposed in the storage cell assembly case 91.

It is to be noted that, in the leaning vehicle batteries 9 and 9b to 9g, the storage-cell-assembly-case upper-sub-member brought into contact with the storage-cell-assembly-case lower member 92 may be a spacer member. The spacer member is a member the size of which is small in the up-down direction bud. For example, the size of the spacer member in the up-down direction bud is smaller than the sizes H2 and H3 (see FIG. 1), or is equal to the size H2 or the size H3. Further, a material for the spacer member may be metal, or may be a resin, a fiber reinforced resin made of a resin reinforced with fibers, or the like. Further, a material for the spacer member may be an elastic material such as rubber.

### REFERENCE SIGNS LIST

- 1, 1a:: LEANING VEHICLE
- 2:: VEHICLE BODY
- 3:: FRONT WHEEL
- 4:: REAR WHEEL
- 5:: STEERING MECHANISM
- 6:: SUSPENSION
- 7:: SEAT
- 8:: POWER UNIT
- 9, 9a-9g:: LEANING VEHICLE BATTERY
- 21:: STEERING MECHANISM SUPPORT PORTION
- 22:: BATTERY CONTAINER
- 22a:: BATTERY CONTAINER FRONT
- 24:: LID
- 51:: HANDLEBAR
- 52:: STEERING SHAFT
- 53:: FRONT FORK
- 61:: SWING ARMS
- 62:: SHOCK ABSORBER
- 80:: ELECTRIC MOTOR
- 90:: STORAGE CELL ASSEMBLY
- 90a:: STORAGE CELL
- 90b:: STORAGE CELL SUBASSEMBLY
- 91:: STORAGE CELL ASSEMBLY CASE
- 91a, 92b, 98b:: SIDE SECTION
- 92:: STORAGE-CELL-ASSEMBLY-CASE LOWER MEMBER
- 92a:: BOTTOM SECTION
- 94:: STORAGE-CELL-ASSEMBLY-CASE UPPER MEMBER
- 96, 98:: STORAGE-CELL-ASSEMBLY-CASE UPPER-SUB-MEMBER
- 98a:: UPPER FACE PORTION
- 100:: RESIN COVER
- 101a-101c:: SUPPORT MEMBER
- 101d:: PLATE-LIKE MEMBER
- 102:: CIRCUIT SECTION
- 102a, 102b:: CIRCUIT BOARD
- 104:: CONNECTOR
- 150:: LEANING-VEHICLE-BATTERY HANDLE
- 200:: PLATE-LIKE MEMBER
- G1, G2:: RECESS
- Opl:: BATTERY INSERTION OPENING
- Op11, Op12:: OPENING
- S1:: FIRST MAIN SURFACE
- S2:: SECOND MAIN SURFACE
- S3:: THIRD MAIN SURFACE
- S4:: FOURTH MAIN SURFACE
- S5:: FIFTH MAIN SURFACE
- S6:: SIXTH MAIN SURFACE
- Sp1:: BATTERY CONTAINING SPACE
- Sp2:: STORAGE-CELL-ASSEMBLY CONTAINING SPACE

## Claims

1. A leaning vehicle battery (9, 9a - 9g) mountable to a leaning vehicle (1, 1a), the leaning vehicle (1, 1a) including a vehicle body (2) that leans in a leaning-vehicle leftward direction when the leaning vehicle (1, 1a) turns in the leaning-vehicle leftward direction and that leans in a leaning-vehicle rightward direction when the leaning vehicle (1, 1a) turns in the leaning- vehicle rightward direction,
wherein, when the leaning vehicle battery (9, 9a - 9g) is mounted on the upright vehicle body (2), frontward, backward, leftward, rightward, upward, and downward directions are defined as leaning-vehicle-battery frontward, backward, leftward, rightward, upward, and downward directions, respectively, and
wherein, when the leaning vehicle battery (9, 9a - 9g) is mounted on the upright vehicle body (2), a surface of the leaning vehicle battery (9, 9a - 9g) supported by the vehicle body (2) of the leaning vehicle (1, 1a) from below in the leaning-vehicle-battery up-down direction is defined as a bottom surface of the leaning vehicle battery (9, 9a - 9g),
wherein the leaning vehicle battery (9, 9a - 9g) comprises:
a storage cell assembly (90) that includes a plurality of storage cells (90a); and
a storage cell assembly case (91) that forms a storage-cell-assembly containing space (Sp2) for containing the storage cell assembly (90), and
wherein the storage cell assembly case (91) satisfies the following conditions (A) and (B) or the following conditions (C) and (D):
(A) the storage cell assembly case (91) includes:
a storage-cell-assembly-case lower member (92) including a bottom section (92a) having a plate shape, the storage-cell-assembly-case lower member (92) having a structure that is inseparable into two or more sub-members,
the bottom section (92a) including:
a first main surface (S1) that receives a load from the storage cell assembly (90) in the leaning-vehicle-battery downward direction; and
a second main surface (S2), which is the bottom surface of the leaning vehicle battery (9, 9a - 9g), supported by the vehicle body
(2) of the leaning vehicle (1, 1a) from below in the leaning-vehicle-battery up-down direction; and
a storage-cell-assembly-case upper member (94) disposed above the storage-cell-assembly-case lower member (92) in the leaning-vehicle-battery upward direction and fixed to the storage-cell-assembly-case lower member (92), the storage-cell-assembly-case upper member (94) having a structure that is separable into two or more storage-cell-assembly-case upper-sub-members (96, 98), and
(B) a size of at least one storage-cell-assembly-case upper-sub-member (96, 98) of the two or more storage-cell-assembly-case upper-sub-members (96, 98) in a leaning-vehicle-battery up-down direction is larger than a size of the storage-cell-assembly-case lower member (92) in the leaning-vehicle-battery up-down direction,
, or
(C) the storage cell assembly case (91) includes:
a storage-cell-assembly-case lower member (92) including a bottom section (92a) having a plate shape, the storage-cell-assembly-case lower member (92) having a structure that is inseparable into two or more sub-members,
the bottom section (92a) including:
a first main surface (S1) that receives a load from the storage cell assembly (90) in the leaning-vehicle-battery downward direction; and
a second main surface (S2), which is the bottom surface of the leaning vehicle battery (9, 9a - 9g), supported by the vehicle body
(2) of the leaning vehicle (1, 1a) from below in the leaning-vehicle-battery up-down direction; and
a storage-cell-assembly-case upper member (94) disposed above the storage-cell-assembly-case lower member (92) in the leaning-vehicle-battery upward direction and fixed to the storage-cell-assembly-case lower member (92), the storage-cell-assembly-case upper member (94) having a structure that is inseparable into two or more sub-members, and
(D) a size of the storage-cell-assembly-case upper member (94) in the leaning-vehicle-battery up-down direction is larger than a size of the storage-cell-assembly-case lower member (92) in the leaning-vehicle-battery up-down direction.

2. The leaning vehicle battery (9, 9a - 9g) according to claim 1, wherein
the storage cell assembly (90) has a structure in which the plurality of storage cells (90a) are stacked together in a stacked direction, the storage cell (90a) having a flat shape.

3. The leaning vehicle battery (9, 9a - 9c, 9e - 9g) according to claim 2, wherein
the stacked direction of the plurality of storage cells (90a) coincides with the leaning-vehicle-battery up-down direction.

4. The leaning vehicle battery (9d, 9e) according to claim 2, wherein
the stacked direction of the plurality of storage cells (90a) coincides with a leaning-vehicle-battery front-back or left-right direction.

5. The leaning vehicle battery (9, 9a - 9c, 9e - 9g) according to claim 3, wherein
the size of the storage cell (90a) in the leaning-vehicle-battery up-down direction disposed on a lowermost position in the plurality of storage cells (90a) in the leaning-vehicle-battery downward direction is larger than the size of the storage-cell-assembly-case lower member (92) in the leaning-vehicle-battery up-down direction.

6. The leaning vehicle battery (9, 9a - 9g) according to any one of claims 1 to 5, wherein
the storage cell assembly (90) is fixed to the storage-cell-assembly-case lower member (92),

7. The leaning vehicle battery (9, 9a - 9g) according to any one of claims 1 to 6, wherein
the leaning-vehicle-battery left-right direction coincides with a vehicle-body left-right direction, and
the size of the storage cell assembly case (91) in the leaning-vehicle-battery left-right direction is smaller than
the size of the storage cell assembly case (91) in the leaning-vehicle-battery front-back direction and
the size of the storage cell assembly case (91) in the leaning-vehicle-battery up-down direction.

8. The leaning vehicle battery (9b) according to any one of claims 1 to 7, wherein
the leaning vehicle battery (9b) includes:
a leaning-vehicle-battery handle (150) attached to the storage cell assembly case (91) and held by a user.

9. The leaning vehicle battery (9c) according to any one of claims 1 to 8, wherein
a recess (G1, G2) for a user to hold is provided on a front, rear, left, or right face of the storage cell assembly case (91).

10. The leaning vehicle battery (9f) according to any one of claims 1 to 9, wherein
the leaning vehicle battery (9f) includes:
a plate-like member (200) including a fifth main surface (S5) brought into contact with the storage cell assembly (90) and a sixth main surface (S6) brought into contact with the bottom section (92a).

11. The leaning vehicle battery (9, 9a - 9g) according to any one of claims 1 to 10, wherein
a material for the storage-cell-assembly-case upper member (94) is different from a material for the storage-cell-assembly-case lower member (92).

12. The leaning vehicle battery (9, 9a - 9g) according to any one of claims 1 to 11, wherein
the specific gravity of the material for the storage-cell-assembly-case upper member (94) is smaller than the specific gravity of the material for the storage-cell-assembly-case lower member (92).

13. A leaning vehicle (1, 1a) comprising:
a vehicle body (2) that leans in a leaning-vehicle leftward direction when the leaning vehicle (1, 1a) turns in the leaning-vehicle leftward direction and that leans in a leaning-vehicle rightward direction when the leaning vehicle (1, 1a) turns in the leaning-vehicle rightward direction;
the leaning vehicle battery (9, 9a - 9g) according to any one of claims 1 to 12 supported by the vehicle body (2);
a drive wheel (4) supported by the vehicle body (2); and
a power unit (8) configured to generate a driving force for rotating the drive wheel (4).

14. The leaning vehicle (1, 1a) according to claim 13, wherein
the power unit (8) includes an electric motor (80), and
the electric motor (80) generates the driving force for rotating the drive wheel (4) by means of electricity from the leaning vehicle battery (9, 9a - 9g).

## Patentansprüche

1. Eine Neigungsfahrzeugbatterie (9, 9a-9g), die an einem Neigungsfahrzeug (1, 1a) anbringbar ist, wobei das Neigungsfahrzeug (1, 1a) eine Fahrzeugkarosserie (2) umfasst, die sich in eine Linksrichtung des Neigungsfahrzeugs neigt, wenn das Neigungsfahrzeug (1, 1a) sich in die Linksrichtung des Neigungsfahrzeugs dreht, und das sich in eine Rechtsrichtung des Neigungsfahrzeugs neigt, wenn das Neigungsfahrzeug sich (1, 1a) sich in die Rechtsrichtung des Neigungsfahrzeugs dreht,
wobei, wenn die Neigungsfahrzeugbatterie (9, 9a-9g) an der aufrechten Fahrzeugkarosserie (2) angebracht ist, ein Vorwärts-, Rückwärts-, Links-, Rechts-, Aufwärts- und Abwärtsrichtung jeweils als Vorwärts-, Rückwärts-, Links-, Rechts-, Aufwärts- und Abwärtsrichtung der Neigungsfahrzeugbatterie definiert ist, und
wobei, wenn die Neigungsfahrzeugbatterie (9, 9a-9g) an der aufrechten Fahrzeugkarosserie (2) angebracht ist, eine Oberfläche der Neigungsfahrzeugbatterie (9, 9a-9g), die durch die Fahrzeugkarosserie (2) des Neigungsfahrzeugs (1, 1a) von unten in der Auf-Ab-Richtung der Neigungsfahrzeugbatterie gestützt ist, als eine Bodenoberfläche der Neigungsfahrzeugbatterie (9, 9a-9g) definiert ist,
wobei die Neigungsfahrzeugbatterie (9, 9a-9g) Folgendes aufweist:
eine Speicherzellenanordnung (90), die eine Mehrzahl von Speicherzellen (90a) umfasst; und
ein Speicherzellenanordnungsgehäuse (91), das einen Speicherzellenanordnungsaufnahmeraum (Sp2) zum Aufnehmen der Speicherzellenanordnung (90) bildet, und
wobei das Speicherzellenanordnungsgehäuse (91) die folgenden Bedingungen (A) und (B) oder die folgenden Bedingungen (C) und (D) erfüllt:
(A) das Speicherzellenanordnungsgehäuse (91) umfasst Folgendes:
ein unteres Bauglied des Speicherzellenanordnungsgehäuses (92), das einen Bodenabschnitt (92a) umfasst, der eine Plattenform aufweist, wobei das untere Bauglied des Speicherzellenanordnungsgehäuses (92) eine Struktur aufweist, die nicht in zwei oder mehr Teilbauglieder getrennt werden kann,
wobei der Bodenabschnitt (92a) Folgendes umfasst:
eine erste Hauptoberfläche (S1), die eine Last von der Speicherzellenanordnung (90) in der Abwärtsrichtung der Neigungsfahrzeugbatterie empfängt; und
eine zweite Hauptoberfläche (S2), die die Bodenoberfläche der Neigungsfahrzeugbatterie (9, 9a-9g) ist, die durch die Fahrzeugkarosserie (2) des Neigungsfahrzeugs (1, 1a) von unten in der Auf-Ab-Richtung der Neigungsfahrzeugbatterie gestützt ist; und
ein oberes Bauglied des Speicherzellenanordnungsgehäuses (94), das in der Aufwärtsrichtung der Neigungsfahrzeugbatterie oberhalb des unteren Bauglieds des Speicherzellenanordnungsgehäuses (92) angeordnet ist und an dem unteren Bauglied des Speicherzellenanordnungsgehäuses (92) befestigt ist, wobei das obere Bauglied des Speicherzellenanordnungsgehäuses (94) eine Struktur aufweist, die in zwei oder mehr obere Teilbauglieder des Speicherzellenanordnungsgehäuses (96, 98) getrennt werden kann, und
(B) eine Größe zumindest eines oberen Teilbauglieds des Speicherzellenanordnungsgehäuses (96, 98) der zwei oder mehr oberen Teilbauglieder des Speicherzellenanordnungsgehäuses (96, 98) in einer Auf-Ab-Richtung der Neigungsfahrzeugbatterie ist größer als eine Größe des unteren Bauglieds des Speicherzellenanordnungsgehäuses (92) in der Auf-Ab-Richtung der Neigungsfahrzeugbatterie, oder
(C) das Speicherzellenanordnungsgehäuse (91) umfasst Folgendes:
ein unteres Bauglied des Speicherzellenanordnungsgehäuses (92), das einen Bodenabschnitt (92a) umfasst, der eine Plattenform aufweist, wobei das untere Bauglied des Speicherzellenanordnungsgehäuses (92) eine Struktur aufweist, die nicht in zwei oder mehr Teilbauglieder getrennt werden kann,
wobei der Bodenabschnitt (92a) Folgendes umfasst:
eine erste Hauptoberfläche (S1), die eine Last von der Speicherzellenanordnung (90) in der Abwärtsrichtung der Neigungsfahrzeugbatterie empfängt; und
eine zweite Hauptoberfläche (S2), die die Bodenoberfläche der Neigungsfahrzeugbatterie (9, 9a-9g) ist, die in der Auf-Ab-Richtung der Neigungsfahrzeugbatterie durch die Fahrzeugkarosserie (2) des Neigungsfahrzeugs (1, 1a) von unten gestützt ist; und
ein oberes Bauglied des Speicherzellenanordnungsgehäuses (94), das in der Aufwärtsrichtung der Neigungsfahrzeugbatterie oberhalb des unteren Bauglieds des Speicherzellenanordnungsgehäuses (92) angeordnet ist und an dem unteren Bauglied des Speicherzellenanordnungsgehäuses (92) befestigt ist, wobei das obere Bauglied des Speicherzellenanordnungsgehäuses (94) eine Struktur aufweist, die nicht in zwei oder mehr Teilbauglieder des Speicherzellenanordnungsgehäuses (96, 98) getrennt werden kann, und
(D) eine Größe des oberen Bauglieds des Speicherzellenanordnungsgehäuses (94) in der Auf-Ab-Richtung der Neigungsfahrzeugbatterie ist größer als eine Größe des unteren Bauglieds des Speicherzellenanordnungsgehäuses (92) in der Auf-Ab-Richtung der Neigungsfahrzeugbatterie.

2. Die Neigungsfahrzeugbatterie (9, 9a-9g) gemäß Anspruch 1, bei der
die Speicherzellenanordnung (90) eine Struktur aufweist, bei der die Mehrzahl von Speicherzellen (90a) zusammen in einer Stapelrichtung gestapelt ist, wobei die Speicherzelle (90a) eine flache Form aufweist.

3. Die Neigungsfahrzeugbatterie (9, 9a-9c, 9e-9g) gemäß Anspruch 2, bei der
die Stapelrichtung der Mehrzahl von Speicherzellen (90a) mit der Auf-Ab-Richtung der Neigungsfahrzeugbatterie zusammenfällt.

4. Die Neigungsfahrzeugbatterie (9d, 9e) gemäß Anspruch 2, bei der
die Stapelrichtung der Mehrzahl von Speicherzellen (90a) mit einer Vor-Zurück-Richtung oder Links-Rechts-Richtung der Neigungsfahrzeugbatterie zusammenfällt.

5. Die Neigungsfahrzeugbatterie (9, 9a-9c, 9e-9g) gemäß Anspruch 3, bei der
die Größe der Speicherzelle (90a) in der Auf-Ab-Richtung der Neigungsfahrzeugbatterie, die an einer untersten Position in der Mehrzahl von Speicherzellen (90a) in der Abwärtsrichtung der Neigungsfahrzeugbatterie angeordnet ist, größer ist als die Größe des unteren Bauglieds des Speicherzellenanordnungsgehäuses (92) in der Auf-Ab-Richtung der Neigungsfahrzeugbatterie.

6. Die Neigungsfahrzeugbatterie (9, 9a-9g) gemäß einem der Ansprüche 1 bis 5, bei der
die Speicherzellenanordnung (90) an dem unteren Bauglied des Speicherzellenanordnungsgehäuses (92) befestigt ist.

7. Die Neigungsfahrzeugbatterie (9, 9a-9g) gemäß einem der Ansprüche 1 bis 6, bei der
die Links-Rechts-Richtung der Neigungsfahrzeugbatterie mit einer Links-Rechts-Richtung der Fahrzeugkarosserie zusammenfällt, und
die Größe des Speicherzellenanordnungsgehäuses (91) in der Links-Rechts-Richtung der Neigungsfahrzeugbatterie kleiner ist als:
die Größe des Speicherzellenanordnungsgehäuses (91) in der Vor-Zurück-Richtung der Neigungsfahrzeugbatterie und
die Größe des Speicherzellenanordnungsgehäuses (91) in der Auf-Ab-Richtung der Neigungsfahrzeugbatterie.

8. Die Neigungsfahrzeugbatterie (9b) gemäß einem der Ansprüche 1 bis 7, bei der
die Neigungsfahrzeugbatterie (9b) Folgendes umfasst:
einen Handgriff der Neigungsfahrzeugbatterie (150), der an dem Speicherzellenanordnungsgehäuse (91) angebracht ist und durch einen Benutzer gehalten wird.

9. Die Neigungsfahrzeugbatterie (9c) gemäß einem der Ansprüche 1 bis 8, bei der
eine Ausnehmung (G1, G2) zum Halten durch einen Benutzer auf einer vorderen, hinteren, linken oder rechten Fläche des Speicherzellenanordnungsgehäuses (91) vorgesehen ist.

10. Die Neigungsfahrzeugbatterie (9f) gemäß einem der Ansprüche 1 bis 9, bei der
die Neigungsfahrzeugbatterie (9f) Folgendes umfasst:
ein plattenähnliches Bauglied (200), das eine fünfte Hauptoberfläche (S5), die mit der Speicherzellenanordnung (90) in Kontakt gelangt, und eine sechste Hauptoberfläche (S6) umfasst, die mit dem Bodenabschnitt (92a) in Kontakt gelangt.

11. Die Neigungsfahrzeugbatterie (9, 9a-9g) gemäß einem der Ansprüche 1 bis 10, bei der
ein Material für das obere Bauglied des Speicherzellenanordnungsgehäuses (94) von einem Material für das untere Bauglied des Speicherzellenanordnungsgehäuses (92) verschieden ist.

12. Die Neigungsfahrzeugbatterie (9, 9a-9g) gemäß einem der Ansprüche 1 bis 11, bei der
das spezifische Gewicht des Materials für das obere Bauglied des Speicherzellenanordnungsgehäuses (94) kleiner ist als das spezifische Gewicht des Materials für das untere Bauglied des Speicherzellenanordnungsgehäuses (92).

13. Ein Neigungsfahrzeug (1, 1a), das folgende Merkmale aufweist:
eine Fahrzeugkarosserie (2), die sich in eine Linksrichtung des Neigungsfahrzeugs neigt, wenn das Neigungsfahrzeug (1, 1a) sich in die Linksrichtung des Neigungsfahrzeugs dreht, und das sich in eine Rechtsrichtung des Neigungsfahrzeugs neigt, wenn das Neigungsfahrzeug sich (1, 1a) sich in die Rechtsrichtung des Neigungsfahrzeugs dreht;
die Neigungsfahrzeugbatterie (9, 9a-9g) gemäß einem der Ansprüche 1 bis 12, die durch die Fahrzeugkarosserie (2) gestützt ist;
ein Antriebsrad (4), das durch die Fahrzeugkarosserie (2) gestützt ist; und
eine Leistungseinheit (8), die dazu konfiguriert ist, eine Antriebskraft zu erzeugen, um das Antriebsrad (4) zu drehen.

14. Das Neigungsfahrzeug (1, 1a) gemäß Anspruch 13, bei dem
die Leistungseinheit (8) einen elektrischen Motor (80) umfasst und
der elektrische Motor (80) die Antriebskraft zum Drehen des Antriebsrads (4) mittels Elektrizität von der Neigungsfahrzeugbatterie (9, 9a-9g) erzeugt.

## Revendications

1. Batterie de véhicule à inclinaison (9, 9a à 9g) pouvant être montée sur un véhicule à inclinaison (1, 1a), le véhicule à inclinaison (1, 1a) comportant une carrosserie de véhicule (2) qui s'incline dans une direction à gauche du véhicule à inclinaison lorsque le véhicule à inclinaison (1, 1a) vire dans la direction à gauche du véhicule à inclinaison et qui s'incline dans une direction à droite du véhicule à inclinaison lorsque le véhicule à inclinaison (1, 1a) vire dans la direction à droite du véhicule à inclinaison,
dans laquelle, lorsque la batterie de véhicule à inclinaison (9, 9a à 9g) est montée sur la carrosserie verticale du véhicule (2), les directions vers l'avant, vers l'arrière, à gauche, à droite, vers le haut et vers le bas sont définies respectivement comme directions vers l'avant, vers l'arrière, à gauche, à droite, vers le haut et vers le bas de batterie de véhicule à inclinaison, et
dans laquelle, lorsque la batterie de véhicule à inclinaison (9, 9a à 9g) est montée sur la carrosserie verticale du véhicule (2), une surface de la batterie de véhicule à inclinaison (9, 9a à 9g) supportée par la carrosserie de véhicule (2) du véhicule à inclinaison (1, 1a) depuis le bas dans la direction de haut en bas de la batterie de véhicule à inclinaison est définie comme une surface inférieure de la batterie de véhicule à inclinaison (9, 9a à 9g),
dans laquelle la batterie de véhicule à inclinaison (9, 9a à 9g) comprend:
un ensemble de cellules d'accumulation d'énergie (90) qui comprend une pluralité de cellules d'accumulation d'énergie (90a); et
un boîtier d'ensemble de cellules d'accumulation d'énergie (91) qui forme un espace contenant un ensemble de cellules d'accumulation d'énergie (Sp2) destiné à contenir l'ensemble de cellules d'accumulation d'énergie (90), et
dans lequel le boîtier d'ensemble de cellules d'accumulation d'énergie (91) remplit les conditions (A) et (B) suivantes ou les conditions (C) et (D) suivantes:
(A) le boîtier d'ensemble de cellules d'accumulation d'énergie (91) comporte:
un élément inférieur (92) de boîtier d'ensemble de cellules d'accumulation d'énergie comportant un segment inférieur (92a) présentant une forme de plaque, l'élément inférieur (92) de boîtier d'ensemble de cellules d'accumulation d'énergie présentant une structure qui ne peut pas être séparée en deux ou plusieurs sous-éléments,
le segment inférieur (92a) comportant;
une première surface principale (S1) qui reçoit une charge de l'ensemble de cellules d'accumulation d'énergie (90) dans la direction vers le bas de la batterie de véhicule à inclinaison; et
une deuxième surface principale (S2), qui est la surface inférieure de la batterie de véhicule à inclinaison (9, 9a à 9g), supportée par le corps de véhicule (2) du véhicule à inclinaison (1, 1a) depuis le bas dans la direction de haut en bas de la batterie de véhicule à inclinaison; et
un élément supérieur de boîtier d'ensemble de cellules d'accumulation d'énergie (94) disposé au-dessus de l'élément inférieur de boîtier d'ensemble de cellules d'accumulation d'énergie (92) dans la direction vers le haut de la batterie de véhicule à inclinaison et fixé à l'élément inférieur de boîtier de l'ensemble de cellules d'accumulation d'énergie (92), l'élément supérieur de boîtier d'ensemble de cellules d'accumulation d'énergie (94) présentant une structure qui peut être séparée en deux ou plusieurs sous-éléments supérieurs de boîtier d'ensemble de cellules d'accumulation d'énergie (96, 98), et
(B) une grandeur d'au moins un sous-élément supérieur de boîtier d'ensemble de cellules d'accumulation d'énergie (96, 98) des deux ou plusieurs sous-éléments supérieurs de boîtier d'ensemble de cellules d'accumulation d'énergie (96, 98) dans une direction de haut en bas de la batterie de véhicule à inclinaison est supérieure à la grandeur de l'élément inférieur (92) de boîtier d'ensemble de cellules d'accumulation d'énergie dans la direction de haut en bas de la batterie de véhicule à inclinaison, ou
(C) le boîtier d'ensemble de cellules d'accumulation d'énergie (91) comporte:
un élément inférieur (92) de boîtier d'ensemble de cellules d'accumulation d'énergie comportant un segment inférieur (92a) présentant une forme de plaque, l'élément inférieur (92) de boîtier d'ensemble de cellules d'accumulation d'énergie présentant une structure qui ne peut pas être séparée en deux ou plusieurs sous-éléments,
le segment inférieur (92a) comportant:
une première surface principale (S1) qui reçoit une charge de l'ensemble de cellules d'accumulation d'énergie (90) dans la direction vers le bas de la batterie de véhicule à inclinaison; et
une deuxième surface principale (S2), qui est la surface inférieure de la batterie de véhicule à inclinaison (9, 9a à 9g), supportée par le corps de véhicule (2) du véhicule à inclinaison (1, 1a) depuis le bas dans la direction de haut en bas de la batterie de véhicule à inclinaison; et
un élément supérieur de boîtier d'ensemble de cellules d'accumulation d'énergie (94) disposé au-dessus de l'élément inférieur de boîtier d'ensemble de cellules d'accumulation d'énergie (92) dans la direction vers le haut de la batterie de véhicule à inclinaison et fixé à l'élément inférieur de boîtier d'ensemble de cellules d'accumulation d'énergie (92), l'élément supérieur (94) de boîtier d'ensemble de cellules d'accumulation d'énergie présentant une structure qui ne peut pas être séparée en deux ou plusieurs sous-éléments, et
(D) une grandeur de l'élément supérieur de boîtier d'ensemble de cellules d'accumulation d'énergie (94) dans la direction de haut en bas de la batterie de véhicule à inclinaison est supérieure à la grandeur de l'élément inférieur (92) de boîtier d'ensemble de cellules d'accumulation d'énergie dans la direction de haut en bas de la batterie du véhicule à inclinaison.

2. Batterie de véhicule à inclinaison (9, 9a à 9g) selon la revendication 1, dans laquelle
l'ensemble de cellules d'accumulation d'énergie (90) présente une structure dans laquelle la pluralité de cellules d'accumulation d'énergie (90a) sont empilées ensemble dans une direction d'empilement, la cellule d'accumulation d'énergie (90a) présentant une forme plane.

3. Batterie de véhicule à inclinaison (9, 9a à 9c, 9e à 9g) selon la revendication 2, dans laquelle
la direction d'empilement de la pluralité de cellules d'accumulation d'énergie (90a) coïncide avec la direction de haut en bas de la batterie de véhicule à inclinaison.

4. Batterie de véhicule à inclinaison (9d, 9e) selon la revendication 2, dans laquelle
la direction d'empilement de la pluralité de cellules d'accumulation d'énergie (90a) coïncide avec une direction avant-arrière ou gauche-droite de la batterie de véhicule à inclinaison.

5. Batterie de véhicule à inclinaison (9, 9a à 9c, 9e à 9g) selon la revendication 3, dans laquelle
la grandeur de la cellule d'accumulation d'énergie (90a) dans la direction de haut en bas de la batterie de véhicule à inclinaison disposée à une position la plus basse dans la pluralité de cellules d'accumulation d'énergie (90a) dans la direction vers le bas de la batterie de véhicule à inclinaison est supérieure à la grandeur de l'élément inférieur (92) de boîtier d'ensemble de cellules d'accumulation d'énergie dans la direction de haut en bas de la batterie de véhicule à inclinaison.

6. Batterie de véhicule à inclinaison (9, 9a à 9g) selon l'une quelconque des revendications 1 à 5, dans laquelle
l'ensemble de cellules d'accumulation d'énergie (90) est fixé à l'élément inférieur (92) de boîtier d'ensemble de cellules d'accumulation d'énergie.

7. Batterie de véhicule à inclinaison (9, 9a à 9g) selon l'une quelconque des revendications 1 à 6, dans laquelle
la direction gauche-droite de la batterie de véhicule à inclinaison coïncide avec une direction gauche-droite de carrosserie de véhicule, et
la grandeur du boîtier d'ensemble de cellules d'accumulation d'énergie (91) dans la direction gauche-droite de la batterie de véhicule à inclinaison est inférieure à
la grandeur du boîtier d'ensemble de cellules d'accumulation d'énergie (91) dans la direction avant-arrière de la batterie de véhicule à inclinaison, et
la grandeur du boîtier d'ensemble de cellules d'accumulation d'énergie (91) dans la direction de haut en bas de la batterie de véhicule à inclinaison.

8. Batterie de véhicule à inclinaison (9b) selon l'une quelconque des revendications 1 à 7, dans laquelle
la batterie de véhicule à inclinaison (9b) comporte:
une poignée de batterie de véhicule à inclinaison (150) fixée au boîtier d'ensemble de cellules d'accumulation d'énergie (91) et maintenue par un utilisateur.

9. Batterie de véhicule à inclinaison (9c) selon l'une quelconque des revendications 1 à 8, dans laquelle
un évidement (G1, G2) pour le maintien par un utilisateur est prévu sur une face avant, arrière, gauche ou droite du boîtier d'ensemble de cellules d'accumulation d'énergie (91).

10. Batterie de véhicule à inclinaison (9f) selon l'une quelconque des revendications 1 à 9, dans laquelle
la batterie de véhicule à inclinaison (9f) comporte:
un élément en forme de plaque (200) comportant une cinquième surface principale (S5) amenée en contact avec l'ensemble de cellules d'accumulation d'énergie (90) et une sixième surface principale (S6) amenée en contact avec le segment inférieur (92a).

11. Batterie de véhicule à inclinaison (9, 9a à 9g) selon l'une quelconque des revendications 1 à 10, dans laquelle
un matériau pour l'élément supérieur de boîtier d'ensemble de cellules d'accumulation d'énergie (94) est différent d'un matériau pour l'élément inférieur de boîtier d'ensemble de cellules d'accumulation d'énergie (92).

12. Batterie de véhicule à inclinaison (9, 9a à 9g) selon l'une quelconque des revendications 1 à 11, dans laquelle
la densité spécifique du matériau pour l'élément supérieur (94) de boîtier d'ensemble de cellules d'accumulation d'énergie est inférieure à la densité spécifique du matériau pour l'élément inférieur (92) de boîtier d'ensemble de cellules d'accumulation d'énergie.

13. Véhicule à inclinaison (1, 1a) comprenant:
une carrosserie de véhicule (2) qui s'incline dans une direction à gauche du véhicule à inclinaison lorsque le véhicule à inclinaison (1, 1a) vire dans la direction à gauche du véhicule à inclinaison et qui s'incline dans une direction à droite du véhicule à inclinaison lorsque le véhicule à inclinaison (1, 1a) vire dans la direction à droite du véhicule à inclinaison;
la batterie de véhicule à inclinaison (9, 9a à 9g) selon l'une quelconque des revendications 1 à 12 supportée par la carrosserie du véhicule (2);
une roue d'entraînement (4) supportée par la carrosserie du véhicule (2); et
une unité d'alimentation d'énergie (8) configurée pour générer une force d'entraînement pour faire tourner la roue d'entraînement (4).

14. Véhicule à inclinaison (1, 1a) selon la revendication 13, dans lequel
l'unité d'alimentation d'énergie (8) comporte un moteur électrique (80), et
le moteur électrique (80) génère la force d'entraînement pour faire tourner la roue d'entraînement (4) au moyen de l'électricité provenant de la batterie de véhicule à inclinaison (9, 9a à 9g).
